# EUROPEAN PATENT SPECIFICATION

(11) **EP 2 413 601 B1**
(45) Date of publication and mention of the grant of the patent: **03.12.2014**
(21) Application number: 11187176.0
(22) Date of filing: 03.01.2008
(51) Int. Cl.: H04N 21/845, H04N 21/84, H04N 21/81, H04N 21/61, H04N 21/44, H04N 21/433, H04N 21/2668, H04N 9/82, H04N 5/907, H04N 5/85, H04N 5/781

(54) **Method of inserting promotional content within downloaded video content**
Verfahren zum Einfügen von Werbeinhalten in einen heruntergeladenen Videoinhalt
Procédé d'insertion d'un contenu promotionnel dans un contenu vidéo téléchargé

(30) Priority: 05.01.2007 US 883576 P; 17.12.2007 US 957660
(43) Date of publication of application: 01.02.2012
(62) Divisional of application: 08713428.4
(73) Proprietor: Sync Acquisition Corporation, Sunnyvale, CA 94085 (US)
(72) Inventor: Gildred, John Taylor, Oakland, CA California 94611 (US)
(74) Representative: Arrowsmith, Peter Michael E.

(56) References cited:
- WO-A-2005/086865
- US-A1- 2002 083 443
- US-A1- 2002 092 019
- US-A1- 2003 097 657
- US-A1- 2003 149 975
- US-A1- 2004 221 308
- US-A1- 2005 055 718
- US-A1- 2006 287 915
- US-A1- 2007 094 363

## Description

### CROSS REFERENCE TO RELATED APPLICATION

This application claims priority of U.S. application No. 60/883,576, filed January 05, 2007 and U.S. application No. 11/957,660 filed December 17, 2007.

### FIELD OF THE INVENTION

This invention relates to content downloaded via the internet. More particularly, the invention relates to the inserting promotional content downloaded via the internet.

### DESCRIPTION OF RELATED ART

Like cable television (TV), satellite TV, IP TV, etc., the present invention downloads content directly into any home-networking device (e.g., TV, personal computer, BluRay product, Plasma Media Receiver, AV Receiver, etc.) and other portable devices (e.g., IPod, MP3, etc.) that has storage. The user of the home-network device and/or portable device may subscribe the content of a channel, a season, and any combination thereof. Since the content is downloaded via an internet connection (wired and/or wireless) and there is no requirement of a settopbox or hardware, the downloading of the content is fast. The present invention, stands alone or incorporates with other existed features, helps make home networking simple and affordable for users.

The present invention is an open TV system in which any TV manufacturer can be connected to the service. The present invention provides the certification for any TV manufacturer. Once the content is downloaded into the user device, the content may be watched without a connection to the internet. The content may be video content of episode content and/or advertising content. This is different from streaming because the content is already downloaded into a storage. Once the content is downloaded, any home networking devices (i.e., TVs), wired or wireless, may share with the downloaded content.

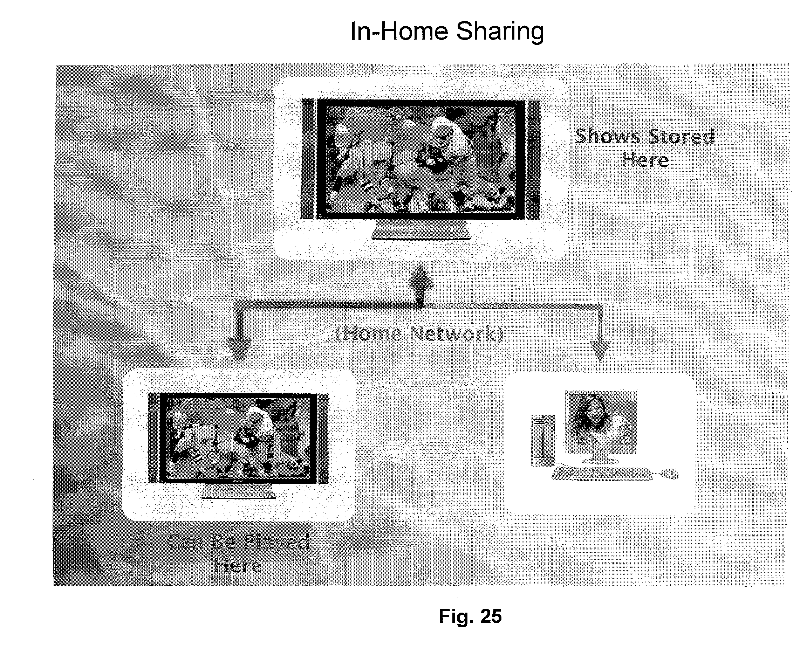

The present invention provides a broadband TV subscription service. It is opened to any manufacturer that makes service compatible products. In other words, it is an open system. The present invention is compatible to the configuration of a small network such as a home network, portable devices (i.e., navigation, DVDs) (see Fig. 25). In other words, the present invention not only offers network connectivity of PCs, intelligent appliances (wired and wireless devices), it also may be used to enable control and data transfer among network devices in the home and/or portable devices. Furthermore, present invention can support essentially any operating system and almost any type of physical networking media. The present invention includes a controller which is the main controlling engine in the present invention client application. Other different modules interact with the present invention controller. In one embodiment, the Present invention interfaces with a browser, a media controller, a DRM, and GUI.

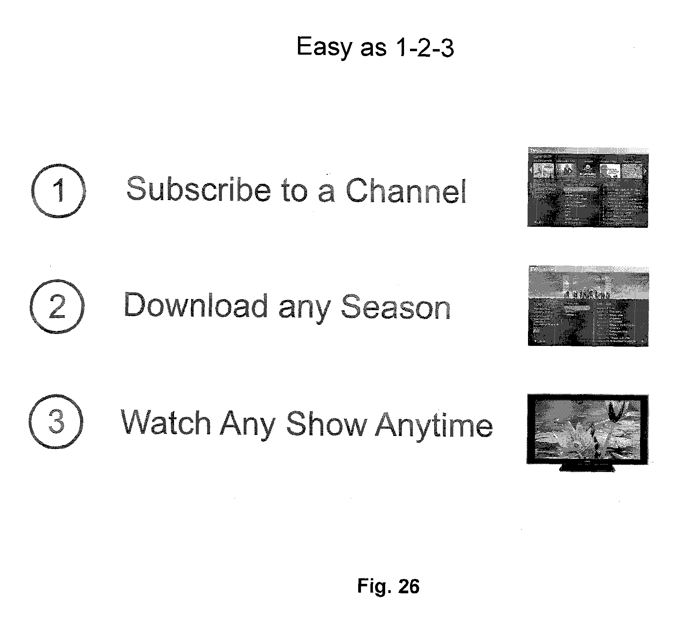

The present invention allows a user/client to download the selected specific program(s), episodes, etc. that had (or have) been broadcasted via cable, satellite, IP, etc. (see Fig. 26). Once a user becomes a subscriber, he/she may browse the content on the present invention server system; make selection of which content to be downloaded via the internet to the user/client storage. The present invention provides consumers with unlimited access to video files. With a subscription, the client can get all the seasons of all shows, and watch what he/she wants at his/her convenient time. It also provides better value since the subscriber only pays for the channel(s) he/she wants including the feature of any TV shows. As mentioned before, the present invention is compatible to any manufacturer's products with a certification. This would eliminate the need of having a VCR. This invention is a method, apparatus, and system of inserting promotional content (advertisements) within downloaded content. Furthermore, the present invention provides client with features that include browsing of Ul screens (e.g., HTML pages), downloading different video files, viewing content (i.e., RSS), playback of video and audio files, file authentication for downloading, and GUI with all modules integrated into it. The end user is able to browse websites for videos, purchase, download and play videos (see Fig. 26). The end user also is able to play videos stored in the local hard drive using a software platform (e.g., GTK+) based media player application with integrated browser and DRM (Digital Rights Management) support. The client can view the content file and advertisement stored in the storage of the client's device.

Up to this point television content has been delivered on a subscription basis through cable and satellite transmission systems. This invention is a method that allows the download of television programs or other episodic content from the internet on a subscription or renewable rental basis. Renewable rental means having access to the content for download and viewing for a period of time after which the rental may be automatically renewed for an additional fee.

The system would allow a user/client to purchase a subscription or renewable rental for a particular episodic program or content item and any episodes of what program will be made available for internet download and viewing. Additional enhancements would be to provide a mechanism for automatic download of the episodes as they become available online. Another enhancement is to allow purchase of subscription or renewable rental on a package of multiple seasons of a program, or a package of multiple programs.

Currently television advertising is inserted into the program broadcast either far in advance of the broadcast or during the broadcast. New methods of content delivery allow a user/client to select a content for downloading and viewing from a storage on their local playback device or PC. As a result, new method of ad insertion is deemed to be useful. This new method offers different ways in inserting ads (video or other format) within the content stream after the download while the content is saved in a local storage, possibly wherein ads are dynamically inserted during content playback. The present invention provides the player the ability to dynamically change advertising. When ads are dynamically inserted, they are updated for subsequent viewing of the content. The dynamic insertion of ads do not provide for the real-time viewing of the ads during viewing of the stored content. In other words, both content and ads are downloaded to and viewed from the storage of the client's device.

The system also allows insertion of highly targeted ads as the user/client who requested the content downloaded is known at the time of the ad insertion. In the case where insertion of ads is done after the content is downloaded, then the promotional content may be downloaded as well. An enhancement would be to only download ads which are targeted to the specific user, or to the requested content. Playback of content with ads would appear as smooth as it is today for live broadcast. Ads could be kept "fresh" by discarding outdated ads and downloading the new ads. The entire ad download and insertion process is to be completely transparent to the user/client.

In certain preferred embodiments the download of contents is via internet.

Preferably ads content is inserted at a designated time.

The method may include providing a download of refresh ads according to the metadata of ads, and the refresh ads may be downloaded according an expiration of old ads.

The ads may be inserted after the episode content is downloaded, and/or after the ads content is downloaded.

The metadata of the episode content may determine mandatory ads.

### BRIEF DESCRIPTION OF THE DRAWINGS

Referring to the following description and accompanying drawings that are used to illustrate embodiments of the invention may best understand the invention. In the drawings:
FIG. 1 is a block diagram illustrating system of providing episodic content for download via the internet on a subscription or renewable rental basis in which one embodiment of the invention can be practiced.
FIG. 2 is a block diagram illustrating a system of inserting promotional content within downloaded content in which one embodiment of the invention can be practiced.
FIG. 3 is a block diagram illustrating a present invention in which one embodiment of the present invention can be practiced.
FIG. 4 is a block diagram illustrating an advertisement insertion in which one embodiment of the present invention can be practiced.
FIG. 5 is a flowchart illustrating a process for downloading content items with metadata in which one embodiment of the invention can be practiced.
FIG. 6 is a flowchart illustrating a process for a playback in which one embodiment of the invention can be practiced.
FIG. 7 is a flowchart illustrating a process for ads refresh in which one embodiment of the invention can be practiced.
FIGS. 8A-8P are flowcharts illustrating a process for setting auto login in which one embodiment of the invention can be practiced.
Figure 9 is a block diagram illustrating the present invention system architecture in which one embodiment of the invention can be practiced.
Figure 10 is a block diagram illustrating the functional view of the present invention controller in which one embodiment of the invention can be practiced.
Figure 11 is a block diagram illustrating the functional view of the media controller in which one embodiment of the invention can be practiced.
Figure 12A is a block diagram illustrating the sequence of the present invention client launch in which one embodiment of the invention can be practiced.
Figure 12B is a block diagram illustrating the sequence of the HTML browsing in which one embodiment of the invention can be practiced.
Figure 12C is a block diagram illustrating the sequence of the media file selection in which one embodiment of the invention can be practiced.
Figure 12D is a block diagram illustrating the sequence of the media file playback in which one embodiment of the invention can be practiced.
Figure 12E is a block diagram illustrating the sequence of the media file playback completion in which one embodiment of the invention can be practiced.
Figure 12F is a block diagram illustrating the sequence of the preview media file in which one embodiment of the invention can be practiced.
Figure 12G is a block diagram illustrating the sequence of the RSS link selection in which one embodiment of the invention can be practiced.
Figure 12H is a block diagram illustrating the sequence of the selection of list widget selection in which one embodiment of the invention can be practiced.
Figure 12I is a block diagram illustrating the sequence of the library mode in which one embodiment of the invention can be practiced.
Figure 12J is a block diagram illustrating the media playback in library mode in which one embodiment of the invention can be practiced.
Figure 12K is a block diagram illustrating the sequence of the video completion in library mode in which one embodiment of the invention can be practiced.
Figure 12L is a block diagram illustrating the full screen video play in which one embodiment of the invention can be practiced.
Figure 12M is a block diagram illustrating the sequence of the full screen completion in which one embodiment of the invention can be practiced.
Figure 13 is a block diagram illustrating a browser interface in which one embodiment of the present invention can be practiced.
Figure 14 is a block diagram illustrating a RSS module interface in which one embodiment of the present invention can be practiced.
Figure 15 is a block diagram illustrating media controller interfaces in which one embodiment of the present invention can be practiced.
Figure 16 is a block diagram of the GUI interface illustrating the different components of the main GUI window in which one embodiment of the present invention can be practiced.
Figure 17 is a block diagram illustrating a framework window in which one embodiment of the invention can be practiced.
Figure 18 is a block diagram illustrating data structure that is used to store the RSS file parsed data in which one embodiment of the present invention can be practiced.
Figure 19 shows a block diagram illustrating advertising data in which one embodiment in which one embodiment of the present invention can be practiced.
Figure 20 shows a block diagram illustrating ads insertion in which one embodiment of the present invention can be practiced.
Figure 21 shows a sample screen illustrating storefront browsing in which one embodiment of the present invention can be practiced.
Figure 22 shows a sample screen illustrating episode display in which one embodiment of the present invention can be practiced.
Figure 23 shows a block diagram illustrating a transaction flow in which one embodiment of the present invention can be practiced.
Figure 24 is a block diagram illustrating a download example in which one embodiment of the present invention can be practiced.
Figure 25 is a diagram illustrating a home networking system in which one embodiment of the present invention can be practiced.
Figure 26 is a diagram illustrating the steps of subscribing to present invention in which one embodiment of the present invention can be practiced.
Figure 27 and Figures 27A-F are diagrams illustrating some storefront screens in which one embodiment of the present invention can be practiced.
Figure 28 is a diagram illustrating how content is shared among other devices as a seamless integration in which one embodiment of the present invention can be practiced.
Figure 29 shows a block diagram illustrating the content flow in which one embodiment of the invention can be practiced.
Figure 30 shows Sync Group Companies in which one embodiment of the invention can be practiced.

### GENERAL DESCRIPTION OF THE INVENTION

In the following description, numerous specific details are set forth. However, it is understood that embodiments of the invention may be practiced without these specific details. In other instances, well-known circuits, structures, and techniques have not been shown in order not to obscure the understanding of this description.

Elements of one embodiment of the invention may be implemented by hardware, software, firmware, microcode, or any combination thereof. When implemented in software, firmware, or microcode, the elements of the embodiment of the present invention are the program code or code segments to perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc. The program or code segments may be stored in a processor readable medium or transmitted by a computer data signal embodied in a carrier wave, or a signal modulated by a carrier, over a transmission medium. The "processor readable or accessible medium" or "machine readable or accessible medium" may include any medium that can store, transmit, or transfer information. Examples of the machine accessible medium include an electronic circuit, a semiconductor memory device, a read-only memory (ROM), a flash memory, an erasable ROM (EROM), a floppy diskette, a compact disk (CD-ROM), an optical disk, a hard disk, a fiber optic medium, a radio frequency (RF) link, etc. The computer data signal may include any signal that can propagate over a transmission medium such as electronic network channels, optical fibers, air, electromagnetic, RF links, etc. The machine accessible medium may be embodied in an article of manufacture. The machine accessible medium may include data that, when accessed by a machine, cause the machine to perform the operation described in the following. The term "data" here refers to any type of information that is encoded for machine-readable purposes. Therefore, it may include program, code, data, file, etc. The program, code, etc. may be embedded in a processor of a plasma media receiver, an AV receiver, or a BluRay player product.

As described above, all or part of an embodiment of the invention may be implemented by software. The software may have several modules coupled to one another. A software module is coupled to another module to receive variables, parameters, arguments, pointers, etc. and/or to generate or pass results, updated variables, pointers, etc. A software module may also be a software driver or interface to interact with the operating system running on the platform. A software module may also be a hardware driver to configure, setup, initialize, send and receive data to and from a hardware device.

It is noted that an embodiment of the invention may be described as a process, which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

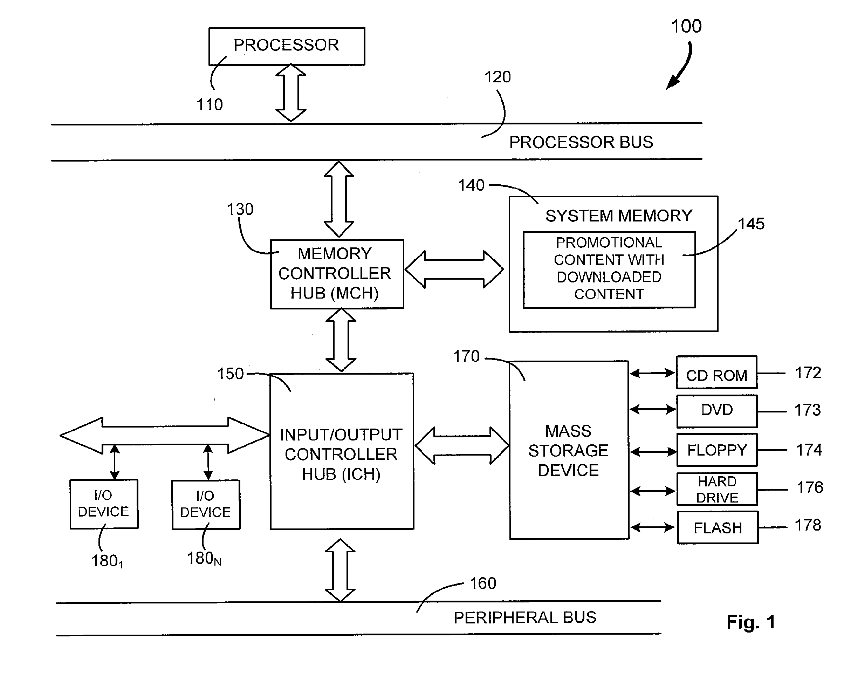

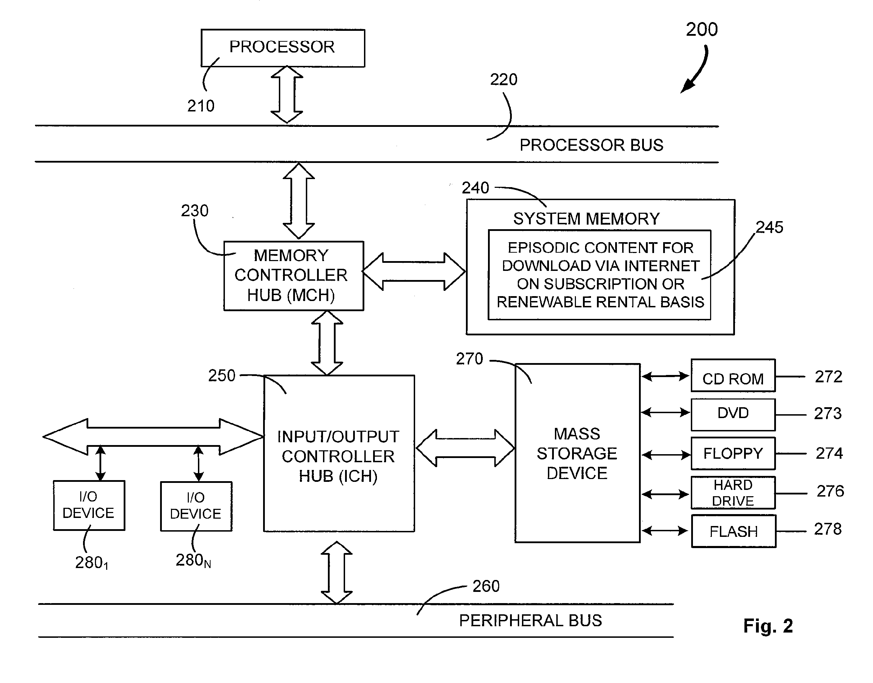

Figure 1 or 2 is a diagram illustrating a processor system 100 in which one embodiment of the invention can be practiced. The processor system 100 includes a processor 110, a processor bus 120, a memory control hub (MCH) 130, a system memory 140, an input/output control hub (ICH) 150, a peripheral bus 160, a mass storage device 170, and input/output devices 180₁ to 180_{N}. Note that the processor system 100 may include more or less elements than these elements.

The processor 110 represents a central processing unit of any type of architecture, such as embedded processors, mobile processors, microcontrollers, digital signal processors, super scalar computers, vector processors, single instruction multiple data (SIMD) computers, complex instruction set computers (CISC), reduced instruction set computers (RISC), very long instruction word (VLIW), or hybrid architecture. For example, the central processing unit may be an embedded processor in a BluRay player product, a plasma media receiver, or an AV receiver.

The processor bus 120 provides interface signals to allow the processor 110 to communicate with other processors or devices, e.g., the MCH 130. The processor bus 120 may support a uni-processor or multiprocessor configuration. The processor bus 120 may be parallel, sequential, pipelined, asynchronous, synchronous, or any combination thereof.

The MCH 130 provides control and configuration of memory and input/output devices, the system memory 140, and the ICH 150. The MCH 130 may be integrated into a chipset that integrates multiple functionalities such as the isolated execution mode, host-to-peripheral bus interface, and memory control. The MCH 130 interfaces to the peripheral bus 160. For clarity, not all the peripheral buses are shown. It is contemplated that the system 140 may also include peripheral buses such as Peripheral Component Interconnect (PCI), accelerated graphics port (AGP), Industry Standard Architecture (ISA) bus, and Universal Serial Bus (USB), etc.

The system memory 140 stores system code (i.e., code to enable the insertion of promotional content within downloaded content or code to enable the downloading of episodic content for download via internet on subscription or renewable rental basis). The system memory 140 is typically implemented with dynamic random access memory (DRAM) or static random access memory (SRAM). The system memory 140 may include program code or code segments implementing one embodiment of the invention. The system memory includes server 145 (including in the Present invention system). Any one of the elements of the device 145 may be implemented by hardware, software, firmware, microcode, or any combination thereof. The system memory 140 may also include other programs or data, which are not shown, such as an operating system. The server 145 contains program code that, when executed by the processor 110 (or processor 210 as shown in Figure 2), causes the processor 110 to perform operations as described below.

The ICH 150 has a number of functionalities that are designed to support I/O functions. The ICH 150 may also be integrated into a chipset together or separate from the MCH 130 to perform I/O functions. The ICH 150 may include a number of interface and I/O functions such as PCI bus interface to interface to the peripheral bus 160, processor interface, interrupt controller, direct memory access (DMA) controller, power management logic, timer, system management bus (SMBus), universal serial bus (USB) interface, mass storage interface, low pin count (LPC) interface, etc.

The mass storage device 170 stores archive information such as code, programs, files, data, applications, and operating systems. The mass storage device 170 may include compact disk (CD) ROM 172, a digital video/versatile disk (DVD) 173, floppy drive 174, hard drive 176, flash memory 178, and any other magnetic or optic storage devices. The mass storage device 170 provides a mechanism to read machine-accessible media. The machine-accessible media may contain computer readable program code to perform tasks as described in the following.

The I/O devices 180₁ to 180_{N} may include any I/O devices to perform I/O functions. Examples of I/O devices 180₁ to 180_{N} include controllers for input devices (e.g., keyboard, mouse, trackball, pointing device), wired or wireless, media cards (e.g., audio, video, and graphics), network cards, and any other peripheral controllers. Elements of one embodiment of the invention may be implemented by hardware, firmware, software or any combination thereof. The term hardware generally refers to an element having a physical structure such as electronic, electromagnetic, optical, electro-optical, mechanical, electromechanical parts, etc. The term software generally refers to a logical structure, a method, a procedure, a program, a routine, a process, an algorithm, a formula, a function, an expression, etc. The term firmware generally refers to a logical structure, a method, a procedure, a program, a routine, a process, an algorithm, a formula, a function, an expression, etc. that is implemented or embodied in a hardware structure (e.g., flash memory, ROM, EROM). Examples of firmware may include microcode, writable control store, and micro-programmed structure. When implemented in software or firmware, the elements of an embodiment of the present invention are essentially the code segments to perform the necessary tasks. The software/firmware may include the actual code to carry out the operations described in one embodiment of the invention, or code that emulates or simulates the operations. The program or code segments can be stored in a processor or machine accessible medium or transmitted by a computer data signal embodied in a carrier wave, or a signal modulated by a carrier, over a transmission medium. The "processor readable or accessible medium" or "machine readable or accessible medium" may include any medium that can store, transmit, or transfer information. Examples of the processor readable or machine accessible medium include an electronic circuit, a semiconductor memory device, a read-only memory (ROM), a flash memory, an erasable ROM (EROM), a floppy diskette, a compact disk (CD) ROM, an optical disk, a hard disk, a fiber optic medium, a radio frequency (RF) link, etc. The computer data signal may include any signal that can propagate over a transmission medium such as electronic network channels, optical fibers, air, electromagnetic, RF links, etc. The code segments may be downloaded via computer networks such as the Internet, Intranet, etc. The machine accessible medium may be embodied in an article of manufacture. The machine accessible medium may include data that, when accessed by a machine, causes the machine to perform the operations described in the following. The machine accessible medium may also include program code embedded therein. The program code may include machine-readable code to perform the operations described below. The term "data" here refers to any type of information that is encoded for machine-readable purposes. Therefore, it may include program, code, data, file, etc.

### DETAILED DESCRIPTION OF THE INVENTION

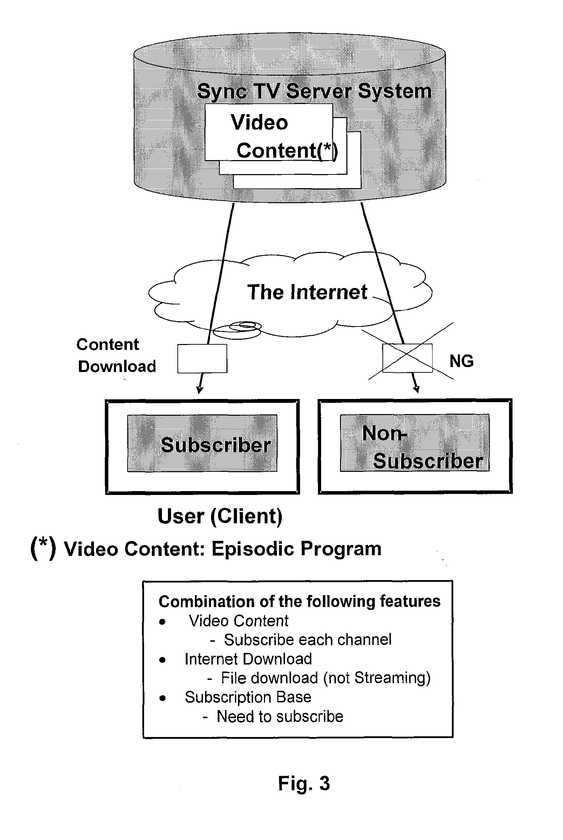

Figure 3 is a block diagram illustrating a present invention in which one embodiment of the present invention can be practiced. The present invention server system stores video content including episode contents and ad contents. It is noted that both types of contents include metadata. The video content includes content from multiple network providers (i.e., ABC, Disney, FOX, HBO, etc.). The video content further includes ads to be inserted before, during, or after the downloading of content. The content is downloaded to a user/client via the internet. The user/client subscribes a certain program(s)/episode(s) from the Present invention. The user/client then downloads the subscribed content into a user/client device. The content may be shared with other user/client devices.

The present invention server system includes both episode content and advertisements (ads) content. The episode content and the ads content may be downloaded simultaneously or separately. The episode content includes metadata of content and the ads content includes metadata of ads. Also, they may be downloaded per the user/client choice or automatically. The downloaded ads content are chosen using metadata of episode content on the device. The ads content is inserted at a designated time during the playing of the episode content. The metadata of the ads content is used to refresh the ads. In other words, the new ads may be updated for viewing while the old ads may be discarded.

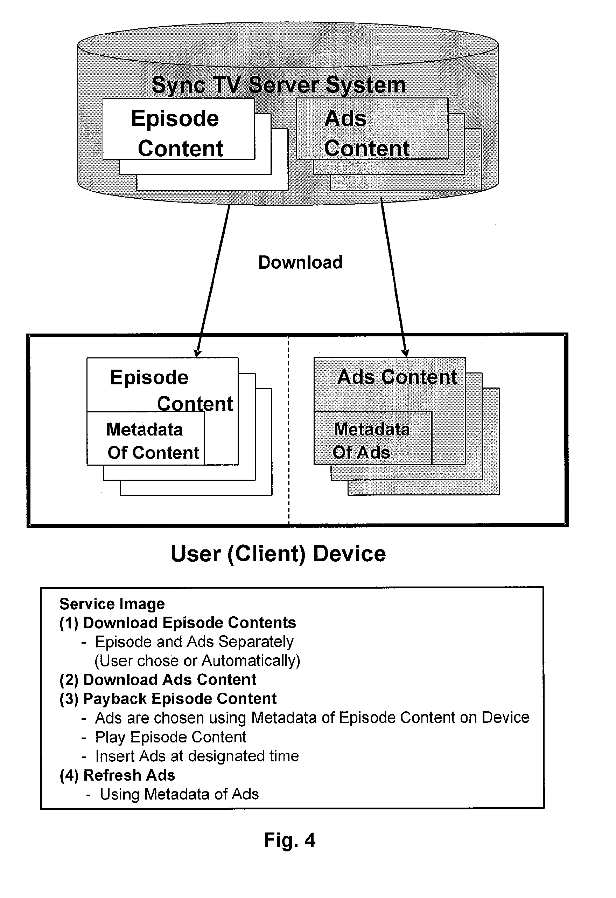

Figure 4 is a block diagram illustrating an advertisement insertion in which one embodiment of the present invention can be practiced. The advertising data may be categorized into two types: content based and ad based. In the content based type, there are ad insertion and ad tags types. The ad insertion type uses a list of time-stamped insertion points and the ad tags type uses criteria such as target gender, target age group, and/or mandatory ads, etc. In the ad based type, the ad tag is used as an activation, for expiration, day part, target gender, target age group, target networks, and/or target shows, etc.

Advertising data are pre-fetched and stored on the player based upon a set of criteria matching rules. During playback, ads are played seamlessly at the insertion points. Ads may be inserted after the episode content and ads content are downloaded, when there is a playback (existing service: before downloading), and at user/client's device (existing service: at server). The episode content may have metadata regarding information on which ads should be shown. The client's device may decide ads using ads metadata. The user/client watches the episode with the latest ads when refresh ads use metadata of ads. The episode content and ads content may be downloaded separately or together at the user's chosen time or automatically. At the playback of the episode content, the ads are chosen and inserted according to the metadata of the episode content on the device. The ads are inserted at a designated time while the episode content is playing. Ads are being refreshed using the metadata of ads while old or expired ads may be discarded.

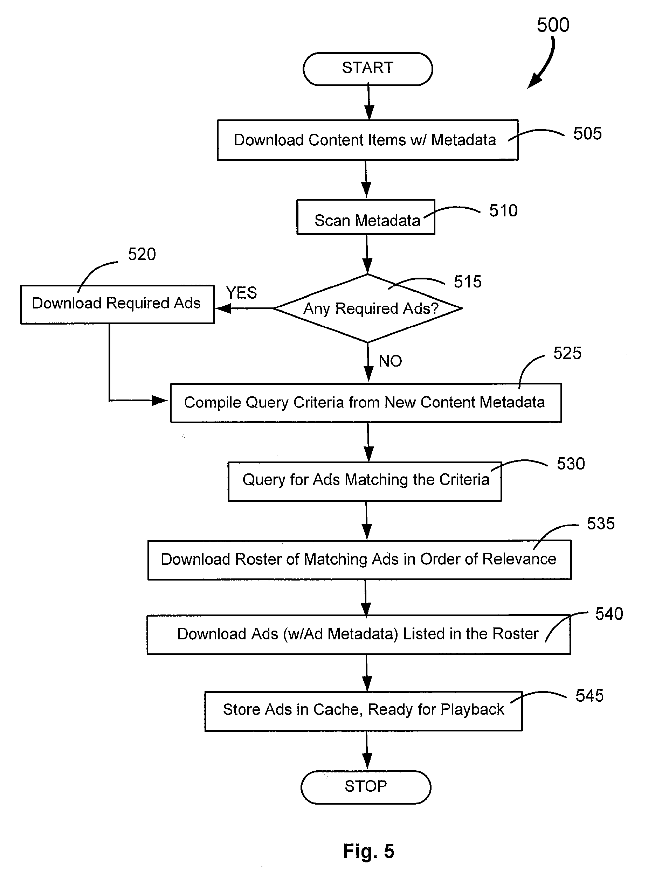

Figure 5 is a flowchart illustrating a process for downloading content items with metadata according to one embodiment of the invention. The process 500 downloads content items with metadata at step 505. The process scans the metadata (step 510) before checking to see whether any required ads at step 515 needs to be inserted. If there is a required ad, then at step 520, the process 500 downloads the required ads before it compiles query criteria from new content metadata at step 525. At step 530, the process 500 queries for ads that match the criteria. The process then downloads roster of matching ads in the order of relevance (step 535) or priority then continues with downloading ads with ad metadata listed in the roster (step 540). The process 500 then stores the ads in a cache at step 545 before the process is terminated. The downloaded content in the user/client's cache is ready for playback.

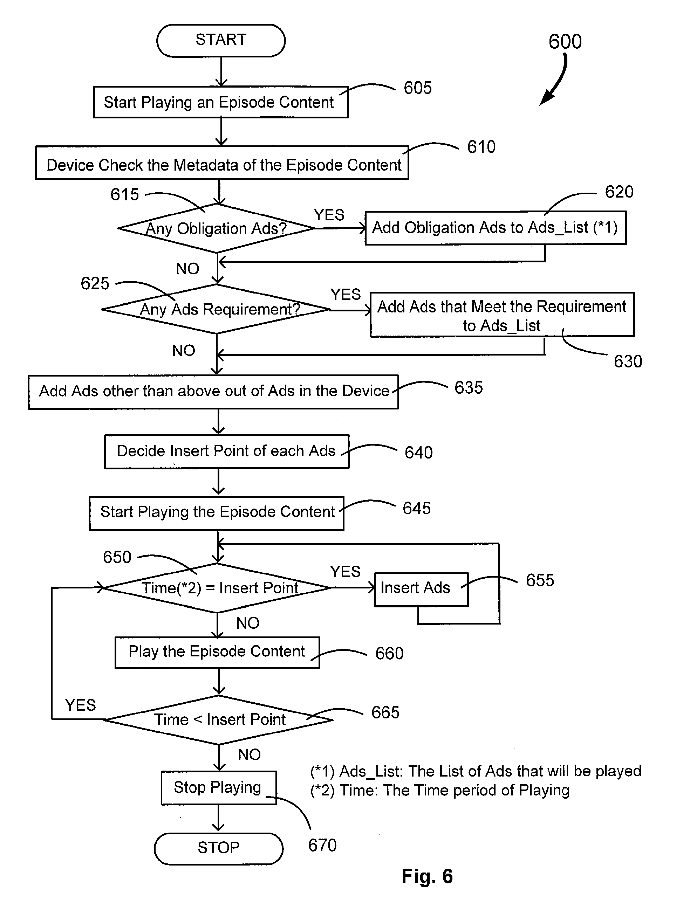

Figure 6 is a flowchart illustrating a process for a playback according to one embodiment of the invention. The process 600 starts out at step 605 by playing an episode content. The episode content is stored in the user/client's device. The device checks the metadata of the episode content (step 610) to see if there is any mandatory (obligation) ads (step 615). If yes, at step 620 the process 600 adds mandatory ads to the ads list. The ads list is the list of all ads that will be played. Then the process continues to check for any ads requirement (step 625). If there is ads requirement, the process 600 adds ads that meet the requirement to the ads list. The process 600 then continues by adding ads other than the mandatory and/or required ads to the device if the ads quota has not been met (step 635). The quota may be the number of ads to be inserted or the number of ads to be kept. The process 600 decides on the insert point of each ad (step 640). The process 600 continues at step 645 to start playing the episode content. The process 600 then checks the time period of playing to see whether it is the time of insert point (step 650). If yes, the process 300 inserts ads (step 655) and then continues to play the episode content (665). The process is terminated.

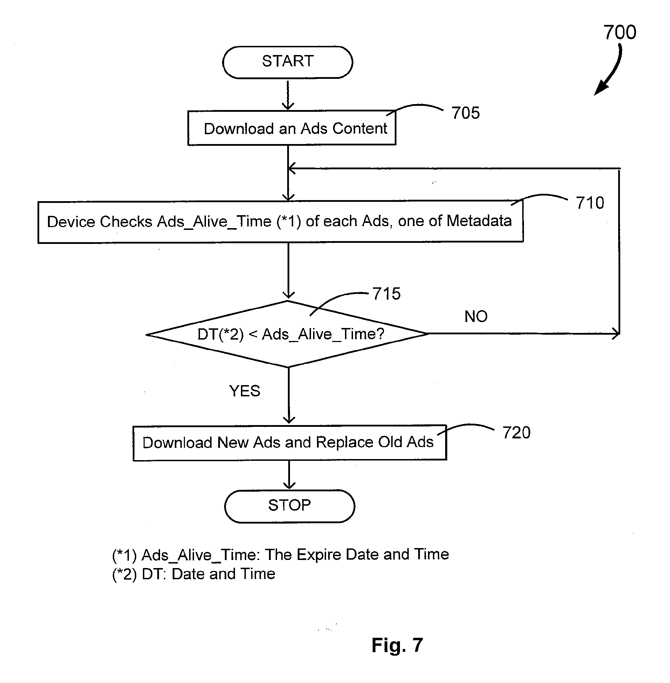

Figure 7 is a flowchart illustrating a process for ads refresh according to one embodiment of the invention. The process 700 starts out by downloading ads content to the user/client's device at step 705. At step 710, the device checks for the expired date and/or time of each ad using one of the metadata. The process 700 then checks to see whether the date and/or time is the expired date and/or time (step 715). If no, the process goes back to step 710 to check for the expired date and/or time and continues from there. Otherwise, the process 700 downloads new ads and replaces the old ads at step 720. The process is then terminated.

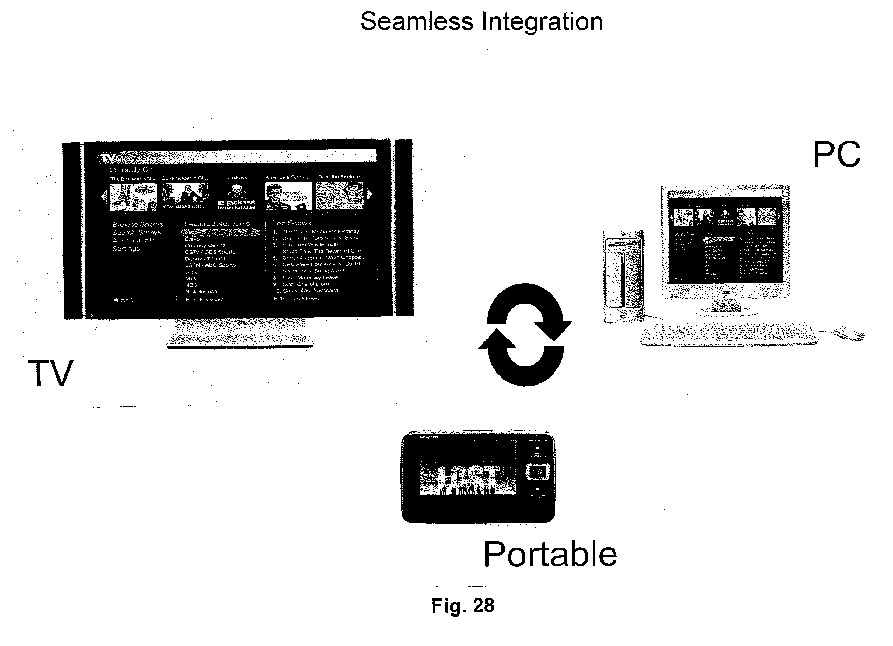

As described before, the present invention is a method for download video content via the internet. A present invention provides television program content including ads content. The contents include metadata. The TV program content is provided by cable TV, Satellite TV, IP TV, etc. The present invention downloads the content directly into a client/user device(s) where the device(s) has a storage. The content may be shared among other user/client's devices via home-networking system (e.g., for home entertainment: TV set, DVD, Blu-ray, AV receiver, HTiB, desktop PC, etc. and for mobile entertainment: portable media player, car DVD, laptop PC, etc.) The content may also be downloaded to a portable device such as a navigation system, portable DVD, etc. The content is shared among other devices as a seamless integration (see Fig. 28). The content includes episode content and ads content. Both contents may be downloaded simultaneously or separately to the user/client device when the user subscribes the content from the Present invention. Each content contains metadata (i.e., metadata of content and metadata of ads). The contents may be stored in the same database or separate database at both the Present invention server system and the user device's storage. The ads content may be inserted automatically or at a designated time during a playback of episode content. The type of ads inserted is determined based on certain criteria of the episode content. The ads stored in the user/client's device may be refreshed or deleted depending on certain criteria.

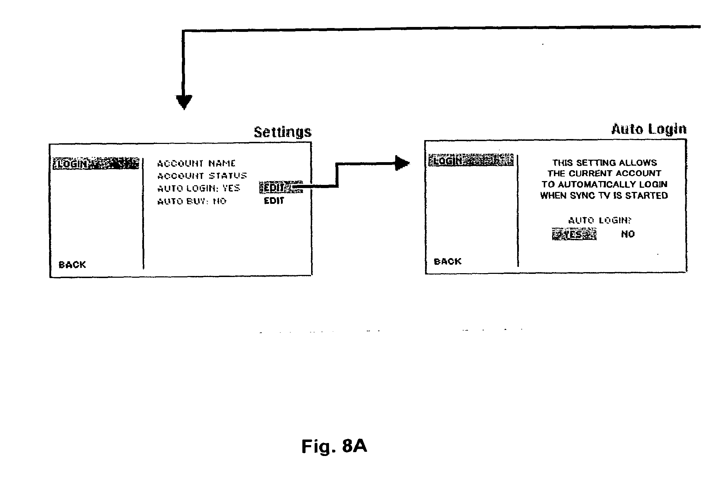

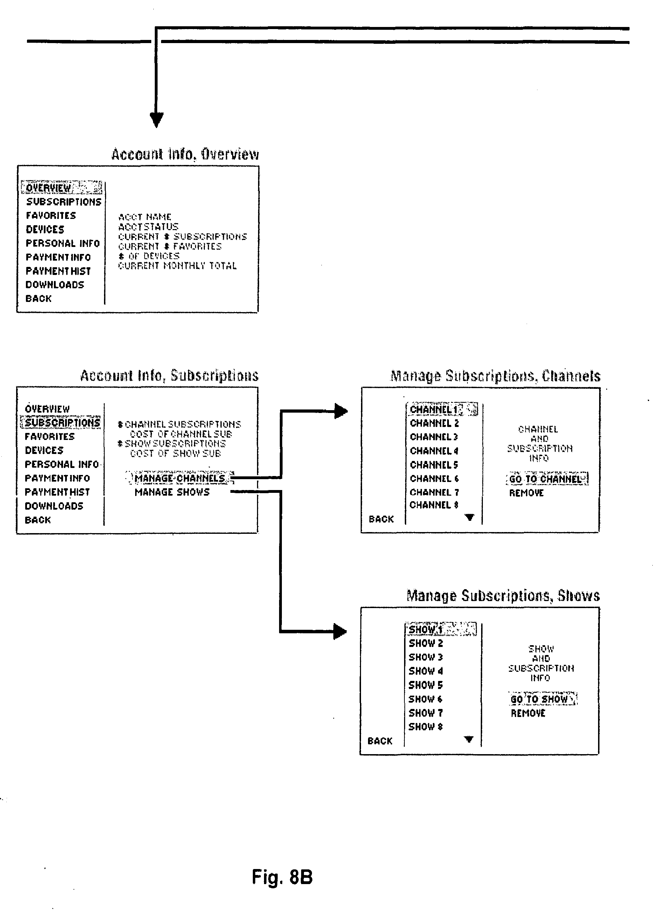

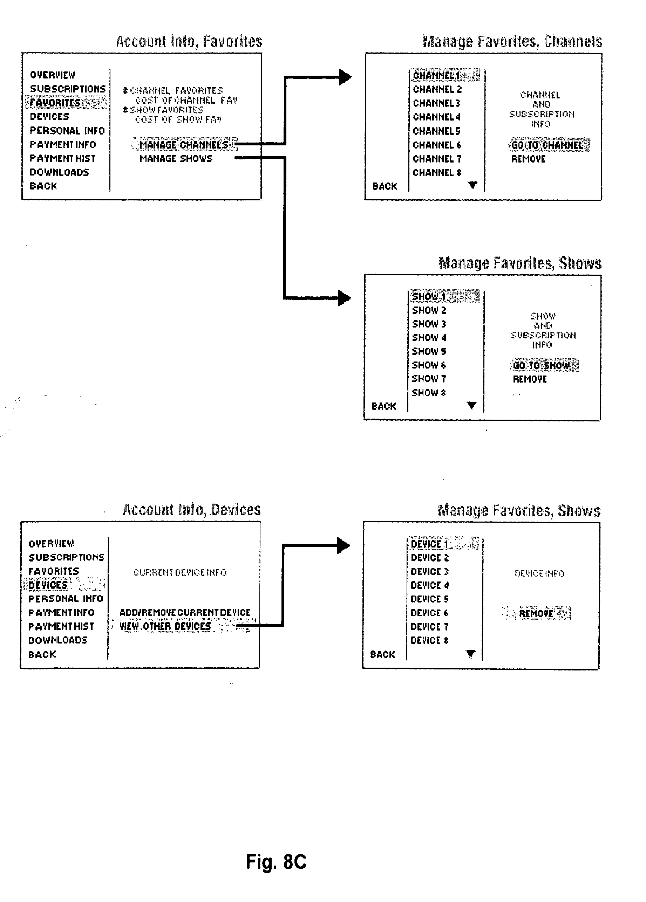

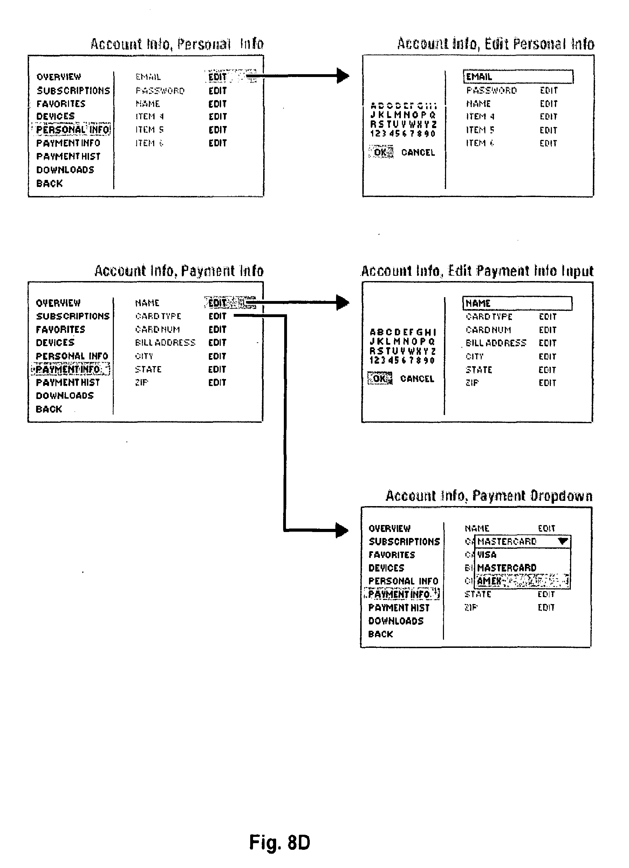

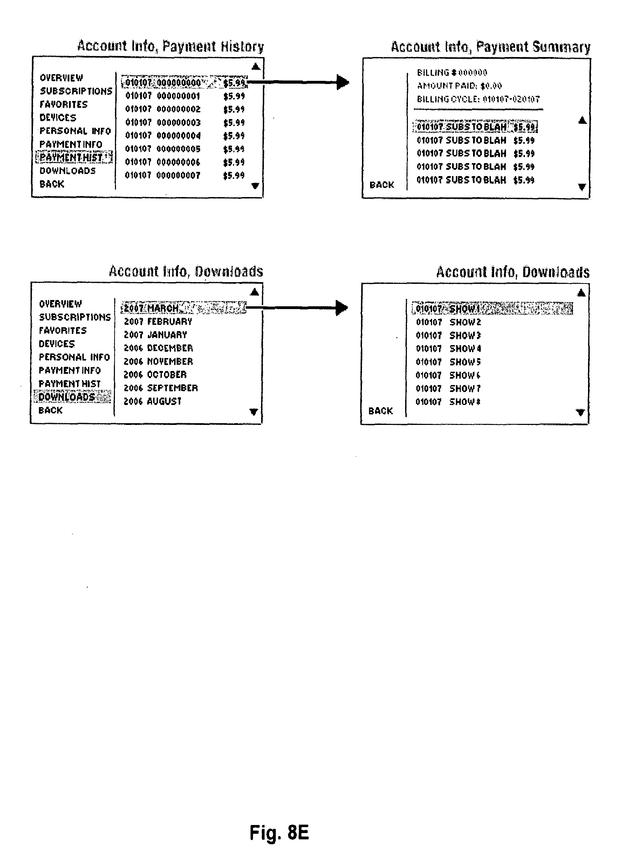

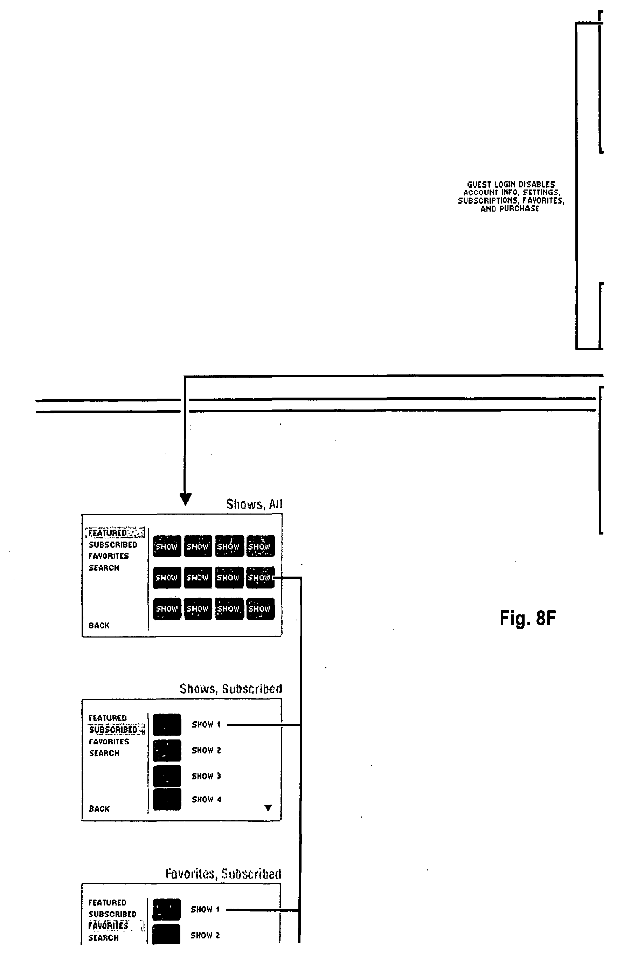

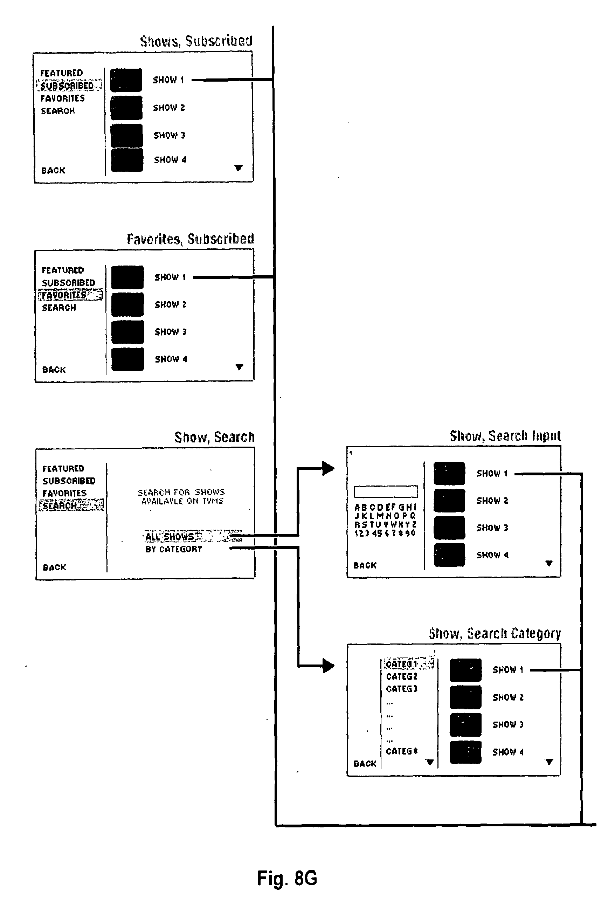

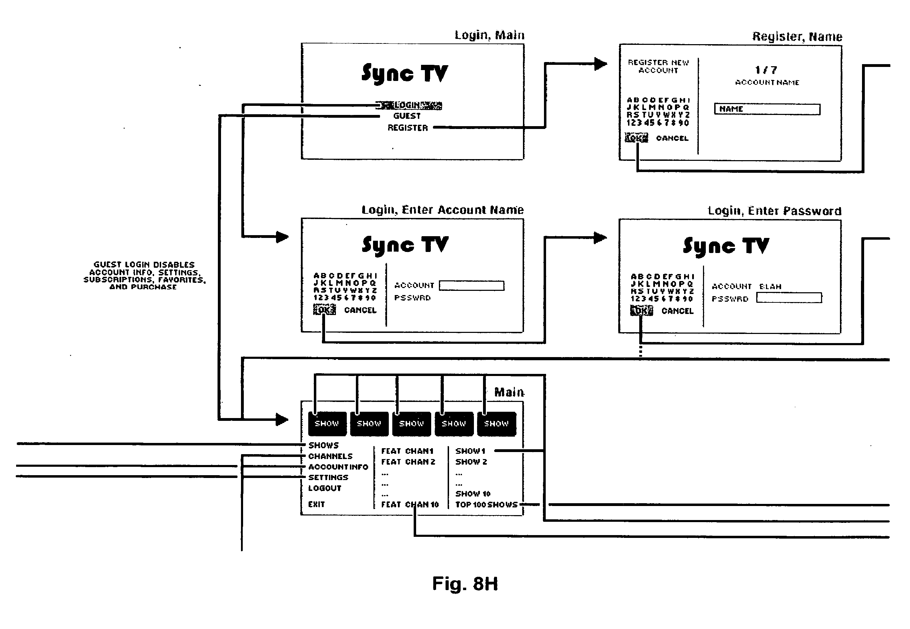

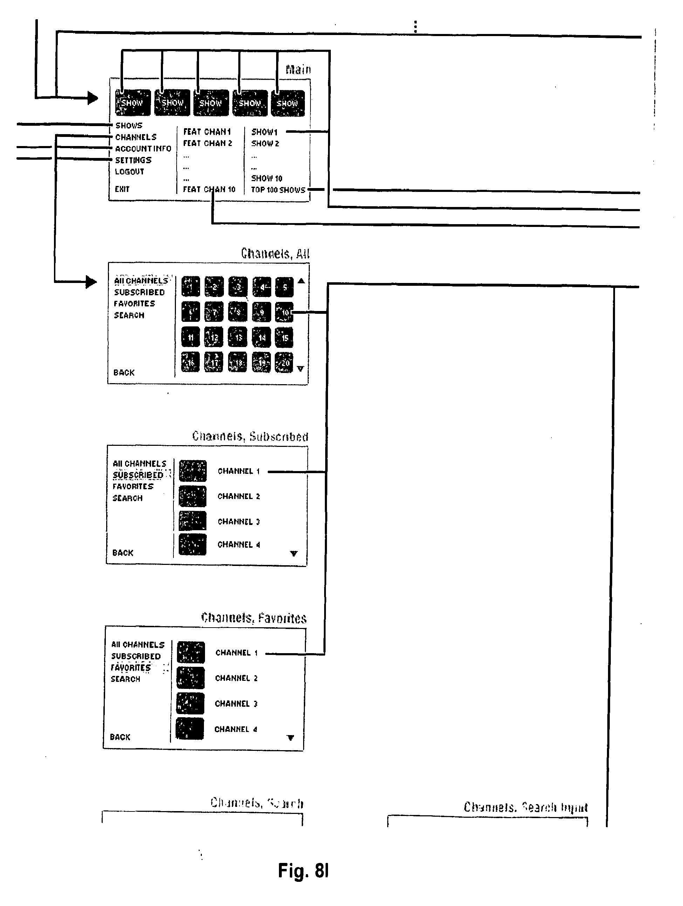

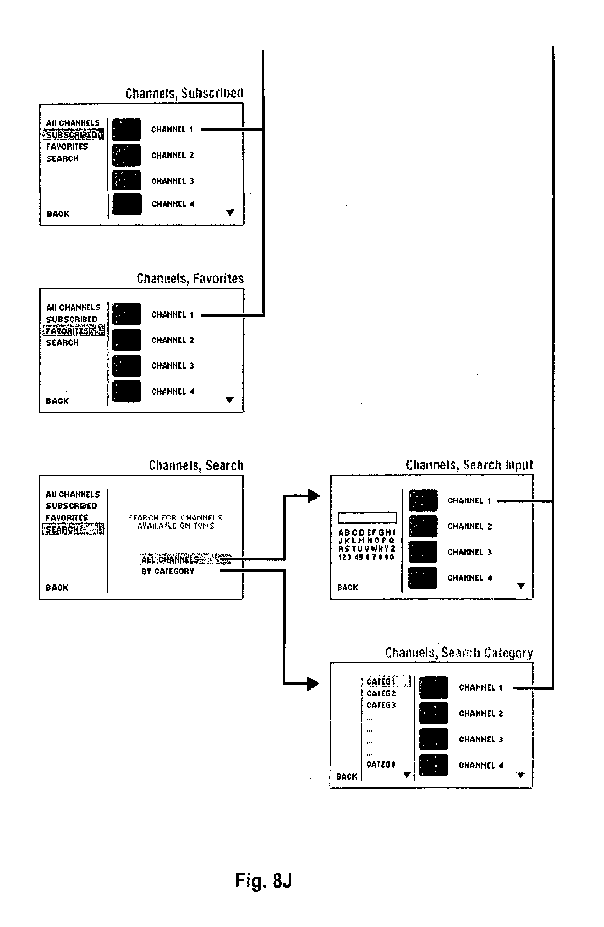

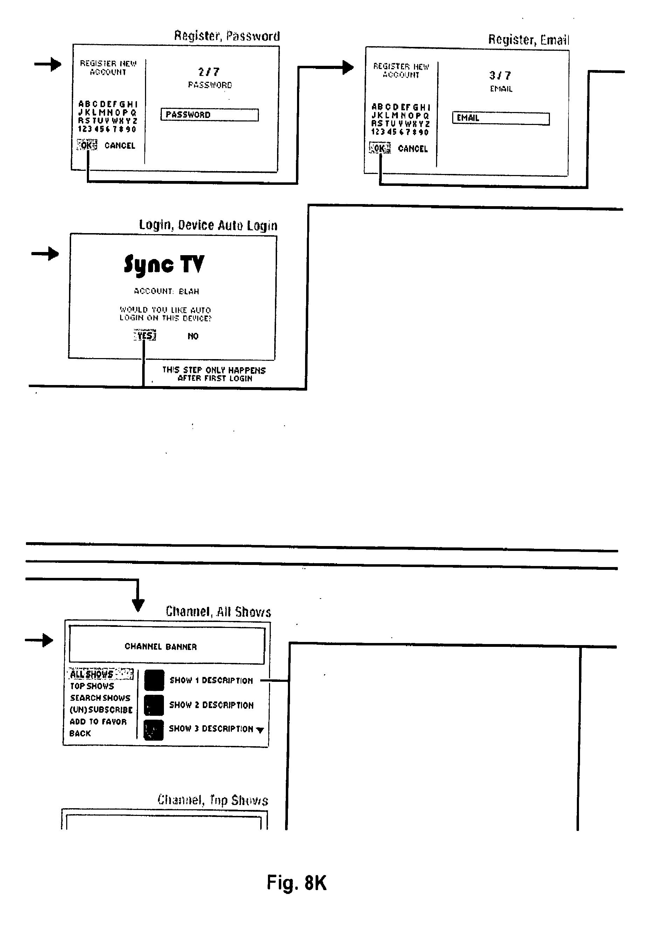

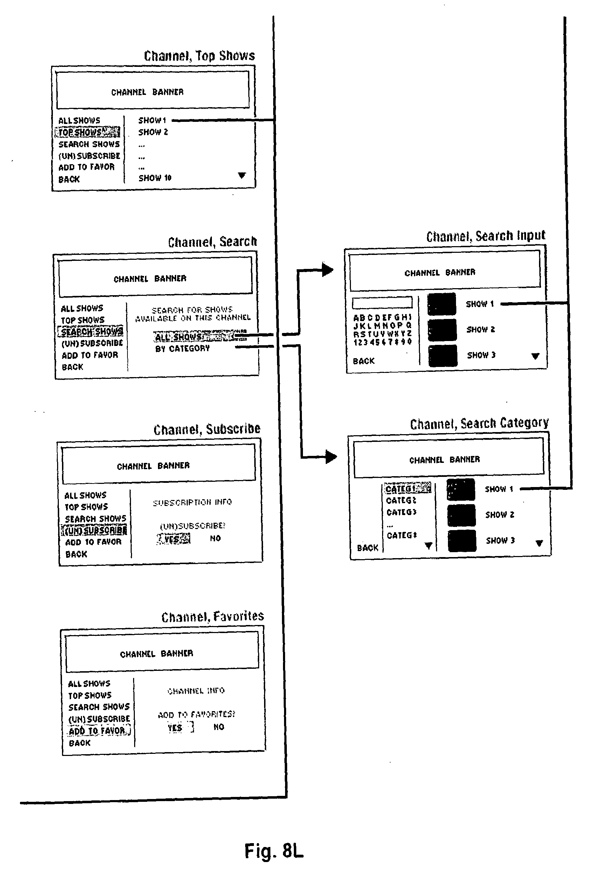

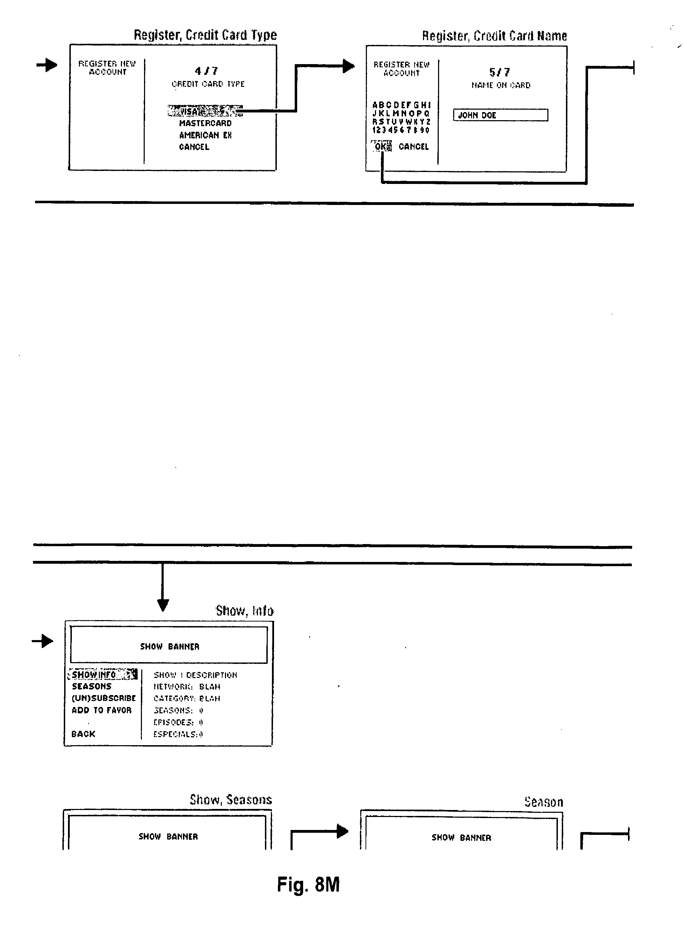

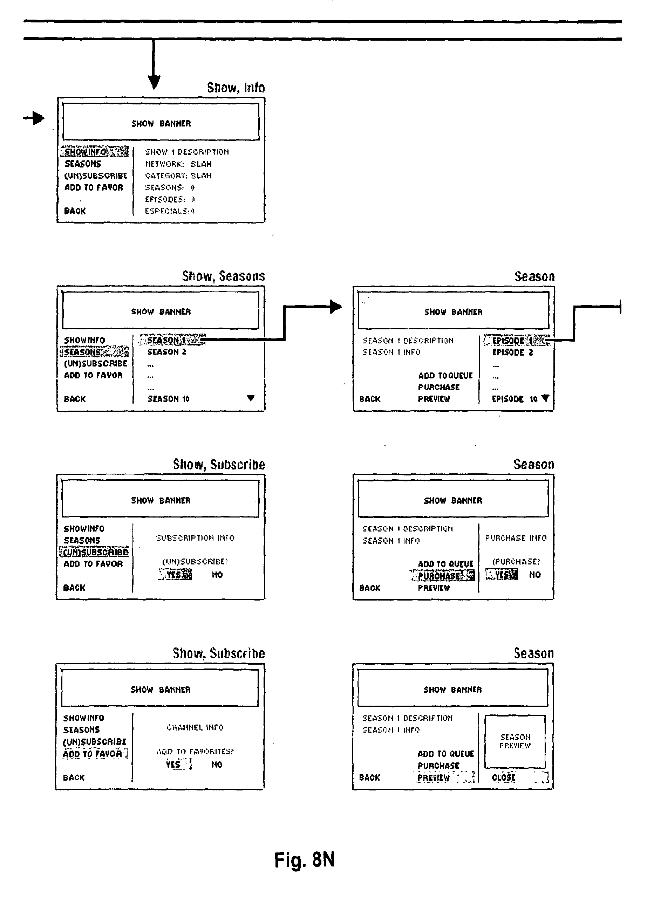

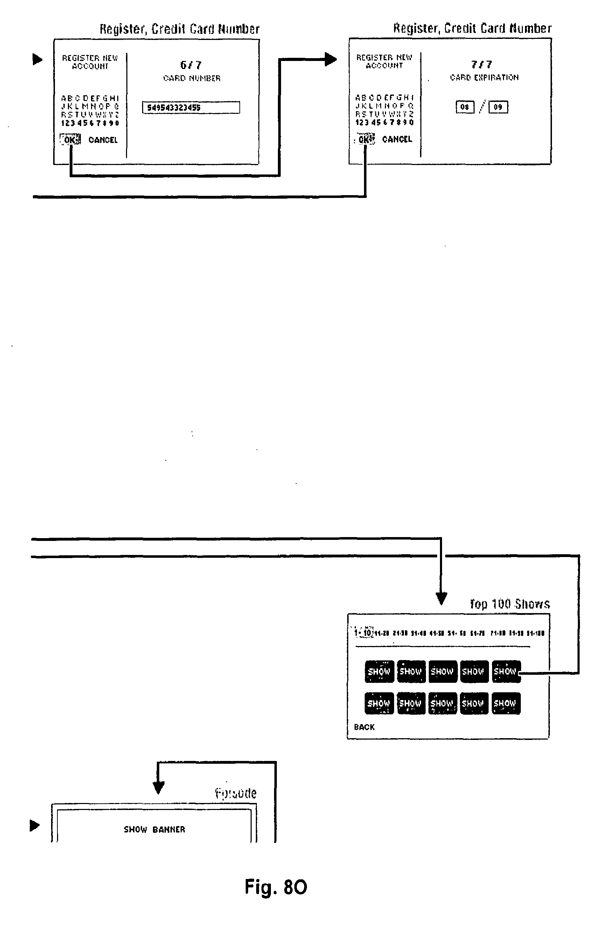

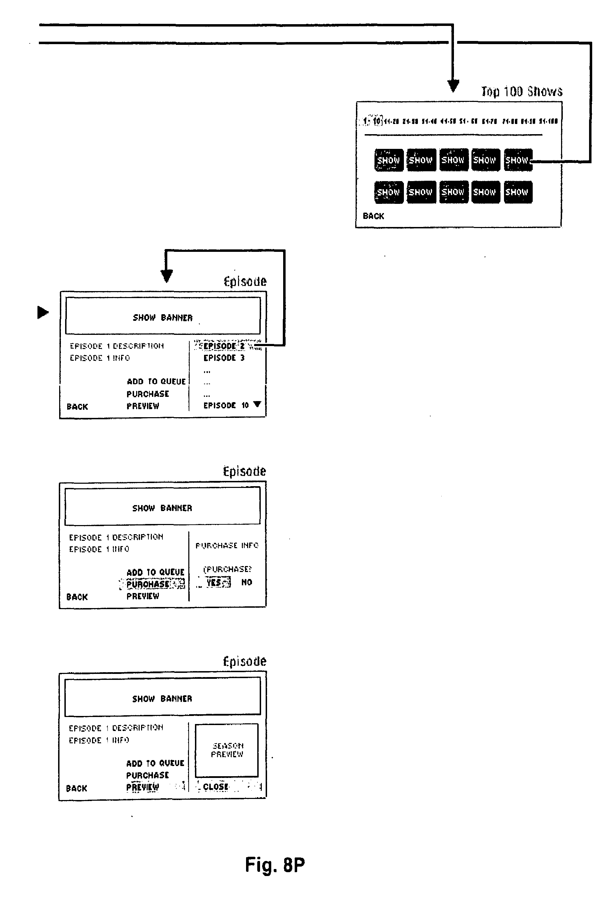

Figure 8A is a block diagram illustrating a settings and auto login screen. The settings feature allows a user to select and edit the auto login and auto buy options. For example, a user can set the current account to automatically login when Present invention is started. Also, the user can set/edit on the automatically buy of the video content. Figure 8B is a block diagram illustrating account information. The account information includes, inter alia, account name, account status, current number of subscriptions, etc. A user can select/edit the options show on the screens as shown on Figures 8A-8P. A user can manage his/her favorite channels, shows, personal information, account information (i.e., payment history, summary, etc.). A user has an option to select featured shows, subscribed shows, favorite shows. Furthermore, a user can also search shows by categories, alphabet orders, etc. Figure 8H is a block diagram illustrating the present invention login main screen. A user can select to login in using an account and password. Otherwise, a user can login as a guest or register as a registered user. There are numerous options for a user to select in the main screen and the sub-screens as shown in 8H-8J. As shown on Fig. 8M, a user can select to pay a subscription during the registration process. User can subscribe content per channel or season combination thereof. Once the content (i.e., episode content, ads content) is downloaded via the internet into a local storage, user can view the content without internet connection. Furthermore, the content can be shared among other networking devices. Ads may be inserted after the downloading of the content, in playback mode (i.e., existing service before download) or at a user's device (i.e., existing service at server). The episode content(s) has metadata regarding the information on which ads should be shown.

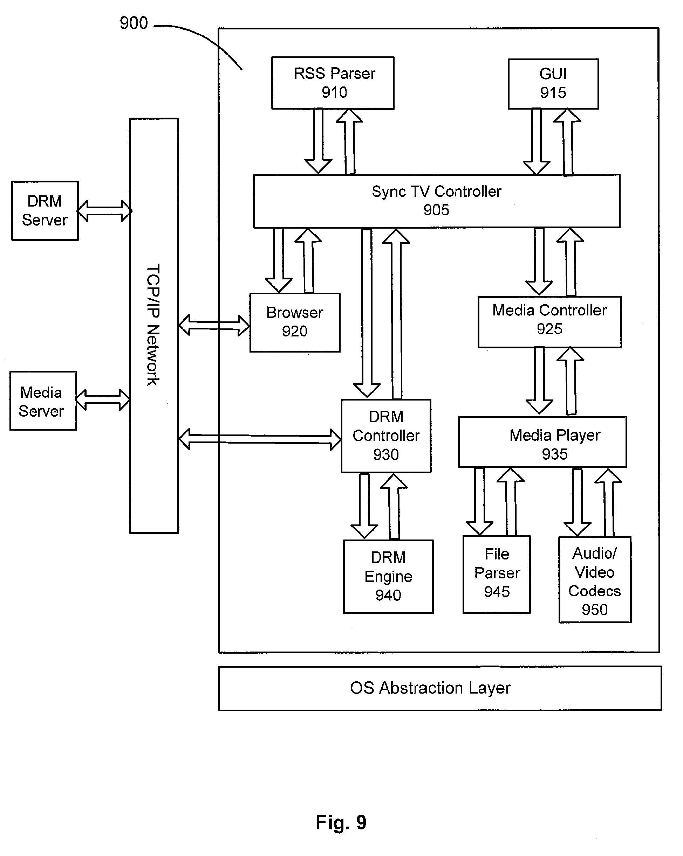

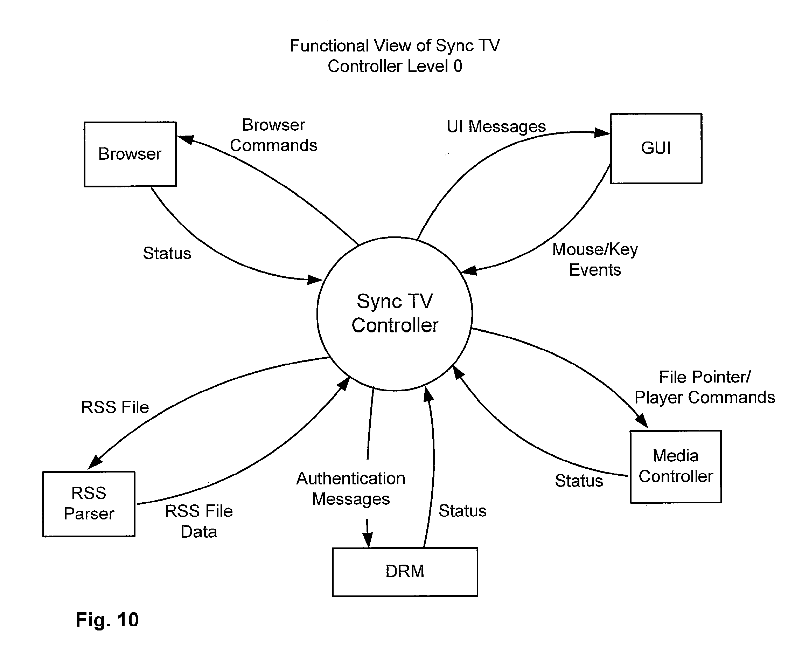

Figure 9 is a block diagram illustrating the present invention system architecture in which one embodiment of the invention can be practiced. The system 900 includes a controller 905, a parser 910 (i.e., RSS), a GUI 915, a browser 920, a media controller 925, a DRM controller 930, the media player 935, a DRM engine 940, a file parser 945, and an audio/video codecs 950. The system interfaces with an OS abstraction layer, and a server (i.e., DRM) and a media server via the TCPIIP network. The present invention controller 905 interacts with all other modules in the system as shown in Fig. 10. The present invention controller is constantly aware of the state of the different modules. The present invention controller 905 initializes all the modules. Each module sends messages to the present invention controller on the status of the application or the action performed by a user. The present invention controller then determines the next set of actions that need to be performed. Module oriented decisions is taken by the module itself. For example, the media player itself takes aspect ratio decision.

The browser 920 is an open source web browser having complete browsing capabilities. The browser 920 is embedded in the present invention GUI. This browser is capable of browsing all the based web applications (e.g., http, etc.) and also has file download capability. The browser 920 interacts with the media server that has web server. The present invention controller 905 initializes the browser, sends commands to download files and close the browser on exit.

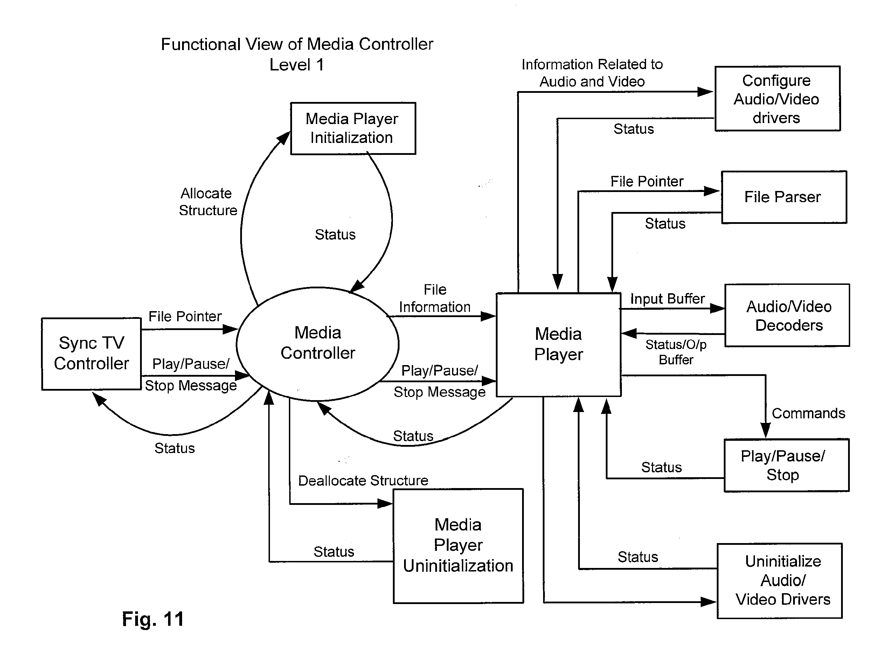

Figure 11 is a block diagram illustrating the function of the media controller in which one embodiment of the invention can be practiced. The media controller 925 is an abstraction layer above the media player. The media controller 925 sends the different player commands to the media player. It is a wrapper above the media player 935 so that the present invention application is independent of the media player and a different media player can be plugged in without disturbing the overall system. The present invention controller issues the player related commands to the media controller 925 and the media controller 925 responds to the status.

The media player module 935 is capable of playing the video and audio data. The media player module may be integrated with an audio/video conversion tool (i.e., FFMpeg) module which provides the file format parsers and audio/video decoders. The media player 935 parses the file for data using the file parsers, decodes the data using the decoder and then plays out the decoded data.

The basic functionality of the controller 930 (i.e., DRM controller) is to authenticate the download transactions. The key business transactions are content purchase, rental and/or subscription. This module may be provided by a third party. This client application interacts with the server (i.e., DRM server) where the authentication occurs. The present invention controller 905 sends the authentication data to the client (i.e., DRM client). The client in turn, interacts with the server. The response is then sent back to the present invention controller 905.

The GUI (Graphical User Interface) 915 provides a framework of different windows to embed the browser, media player and other Ul elements. The GUI may be based on GTK+, which is a multi-platform toolkit for creating graphical user interfaces. The present invention controller 905 initializes the GUI framework. The GUI framework captures different mouse, key events, virtual devices or the like, and pass this information to the present invention controller 905. The present invention controller also sends Ul requests (e.g., hide window, show window, etc.) to the GUI.

For external interaction, the independent modules like browser 920 and client 940 interact with the respective servers via TCP/IP (Transmission Control Protocol/Internet Protocol) network. The OS (Operating System) abstraction layer provides a set of generic system API's which is used by the independent modules. This layer interfaces with the OS and makes use of the platform specific system API's.

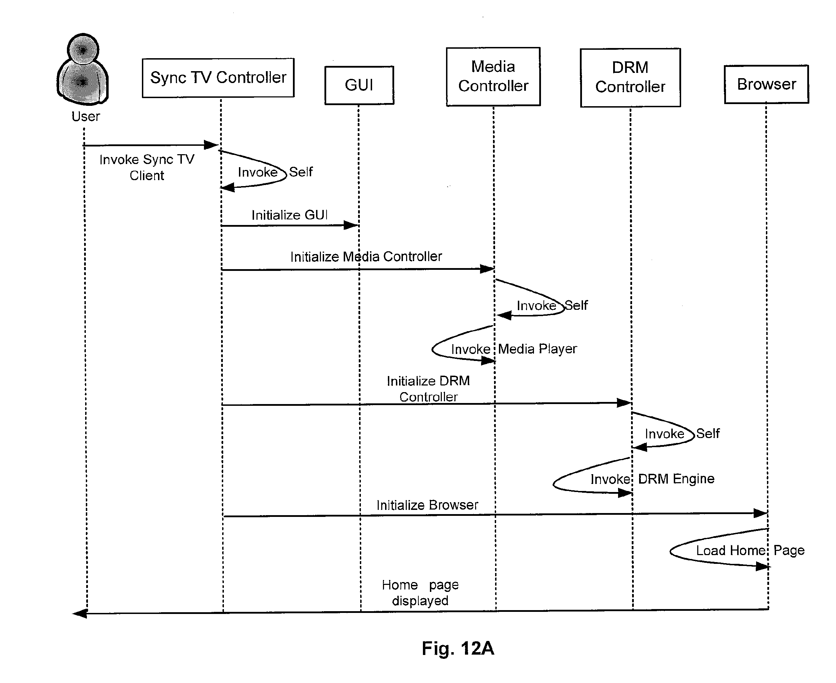

Figure 12A is a block diagram illustrating the sequence of the present invention client launch in which one embodiment of the invention can be practiced. The sequence of present invention client launch is as follows:
- User launches present invention client.
- Present invention controller is invoked.
- Present invention controller sends message to GUI to create the main user interface.
- Present invention controller initializes the media controller.
- Media controller initializes the media player.
- Present invention controller initializes DRM controller.
- Present invention controller initializes the browser and loads the home page.

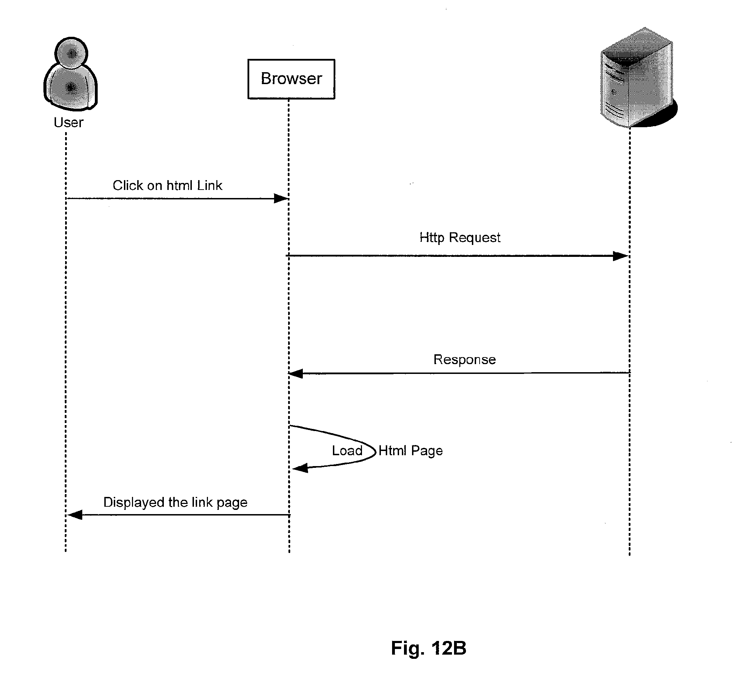

Figure 12B is a block diagram illustrating the sequence of the HTML (Hypertext Markup Language) browsing in which one embodiment of the invention can be practiced. One example of the sequence of HTML browsing is as follows:

### Pre-condition

The browser is loaded with the home page and is ready for browsing.
- User begins to browse by clicking on different HTML links.
- HTTP request is sent to media server.
- Media server responds with the new HTML page.
- HTML page is loaded into the browser.

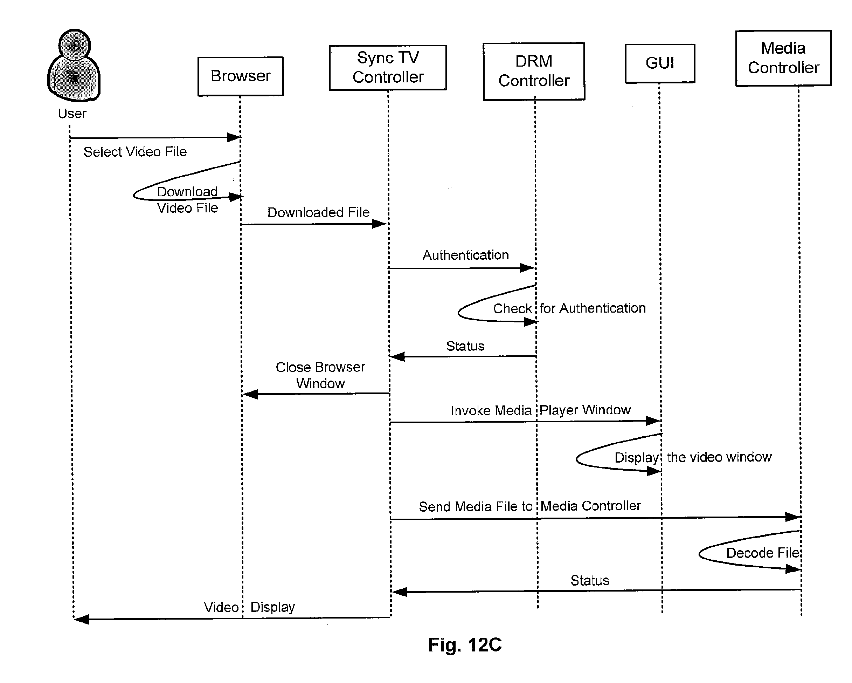

Figure 12C is a block diagram illustrating the sequence of the media file selection in which one embodiment of the invention can be practiced. The sequence of media file selection is as follows:

### Pre-condition

The HTML page with links to video files is available in the browser.
- User selects a video file in the browser.
- The video file is downloaded by the browser.
- Present invention controller is called with the file name.
- Present invention calls DRM for authentication.
- Browser window is closed.
- Media player window appears in GUI.
- Media file begins to play in the window of present invention client.

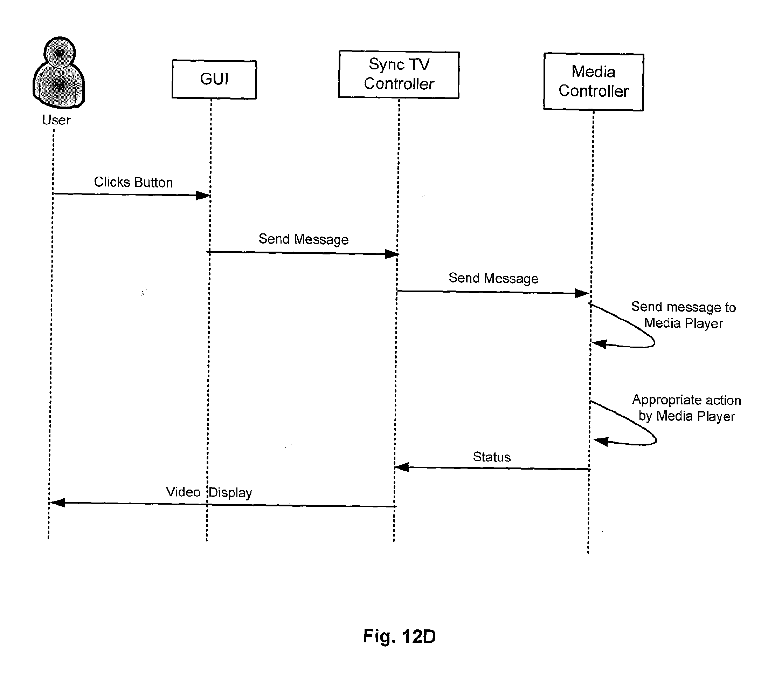

Figure 12D is a block diagram illustrating the sequence of the media file playback in which one embodiment of the invention can be practiced. One example of the sequence of media file playback is as follows:

### Pre-condition

Media file is being played in the media window of the GUI.
- User clicks on one of the buttons (Play, Pause, Stop, FWD, RWD, etc.)
- Message is select to present invention controller.
- Present invention controller takes the appropriate action with media controller.

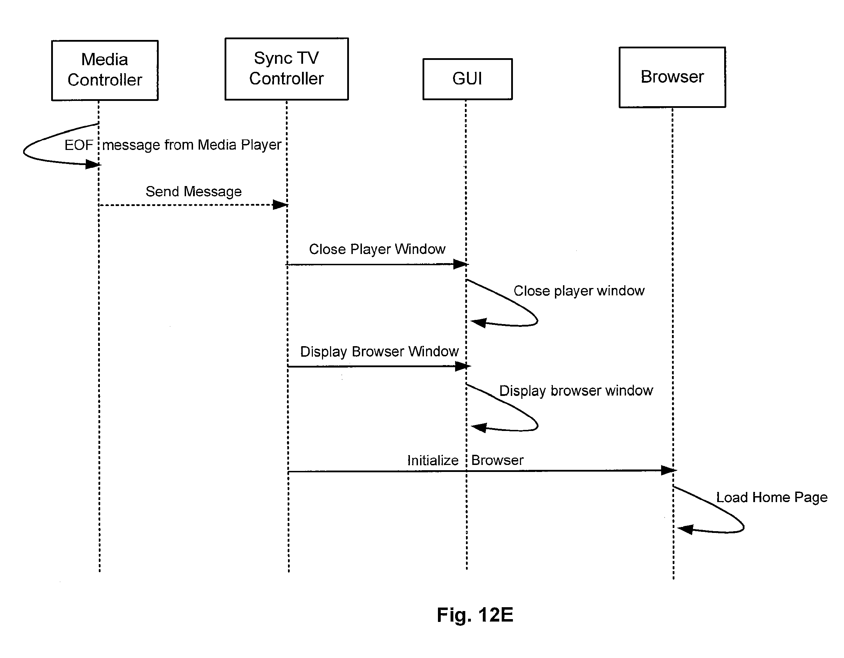

Figure 12E is a block diagram illustrating the sequence of the media file playback completion in which one embodiment of the invention can be practiced. One example of the sequence of media playback completion is as follows:

### Pre-condition

- The complete media file has been played in media player window.
- Media player sends message to Media controller.
- Media Controller sends message to Present invention controller.
- Present invention controller sends message to GUI to close the media window.
- Present invention controller sends message to GUI to display browser window.
- Present invention controller sends message to browser to initialize and load the home page.

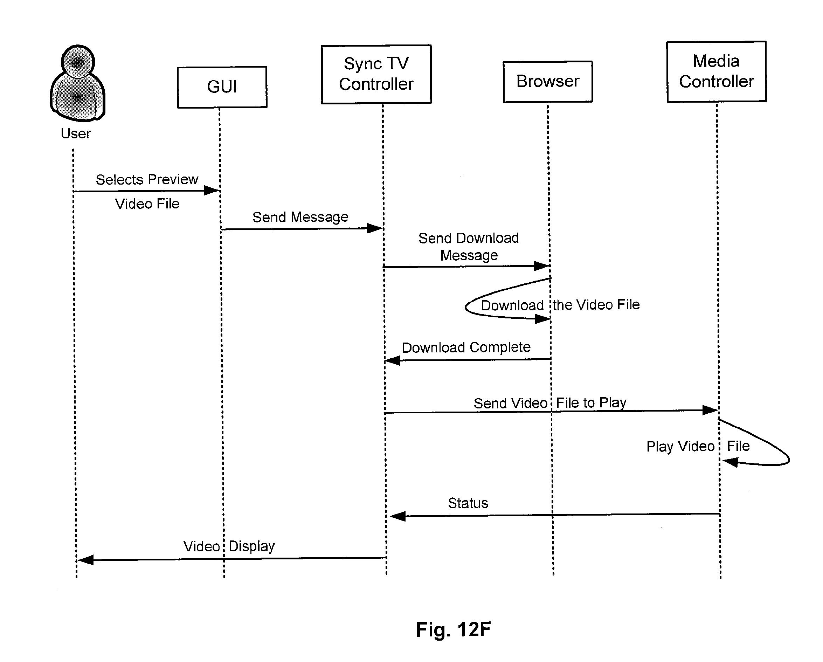

Figure 12F is a block diagram illustrating the sequence of the preview media file in which one embodiment of the invention can be practiced. One example of the sequence of the preview of media file is as follows:

### Pre-condition

- The browser has HTML page with links to small media files.
- User selects a small video file for preview.
- File is downloaded by browser.
- Present invention controller receives a message that file is downloaded.
- Present invention controller sends message to media controller to play the file.
- Media controller sends message to media player to play the file.
- Media file begins to play.

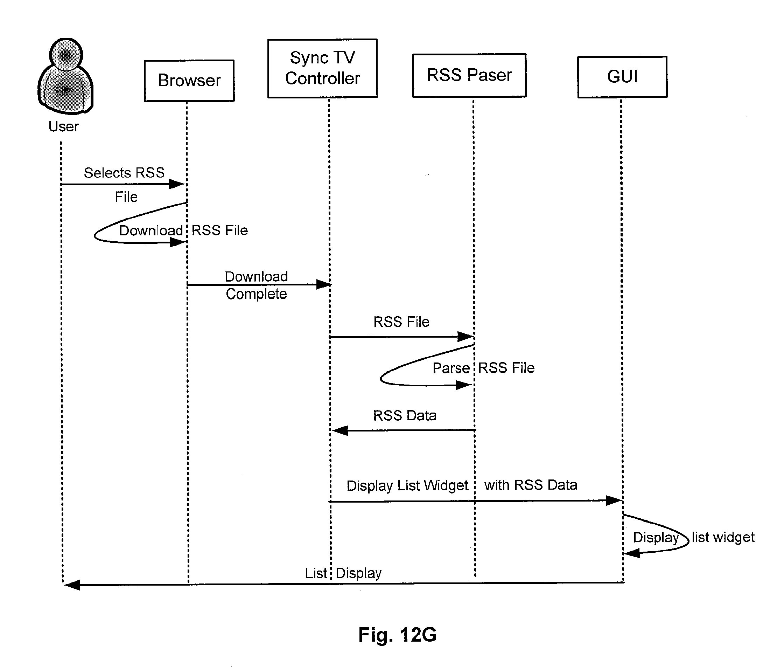

Figure 12G is a block diagram illustrating the sequence of the RSS (Really Simple Syndication) link selection in which one embodiment of the invention can be practiced. One example of the sequence of RSS link selection is as follows:

### Pre-condition

- The browser has a HTML page with links to RSS files.
- User selects a RSS file in the browser.
- RSS file is downloaded by the browser.
- Present invention controller receives message that file is downloaded.
- Present invention controller gets the RSS file parsed by the RSS parser.
- RSS parser parses the file and loads the data structure with data.
- Present invention sends message to GUI to display list widget with RSS data.

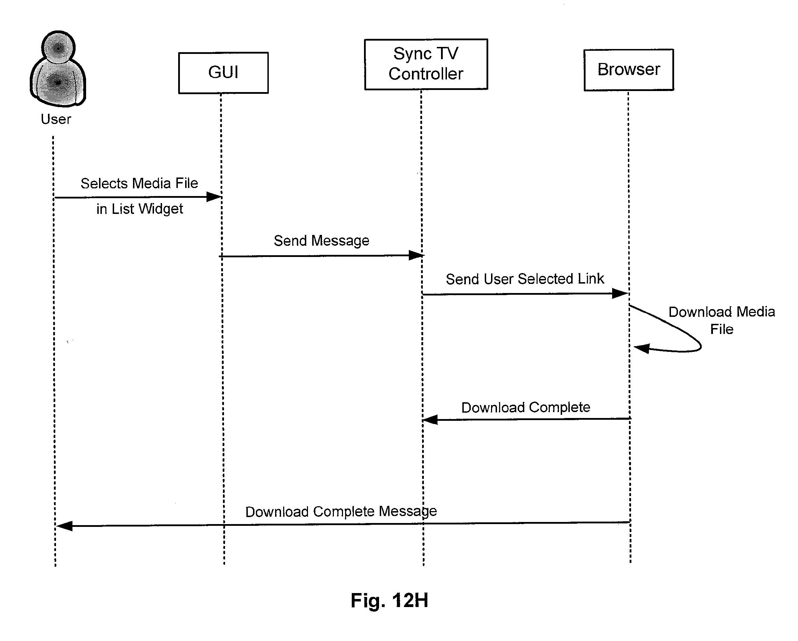

Figure 12H is a block diagram illustrating the sequence of the selection of list widget selection in which one embodiment of the invention can be practiced. One example of the selection of list widget selection is as follows:

### Pre-condition

- The list widget displays the different media files data.
- User selects a media file in the list widget.
- GUI sends message to present invention controller with the link.
- Present invention controller calls browser with the link.
- Browser downloads the media file.
- Present invention controller receives message that file is downloaded.

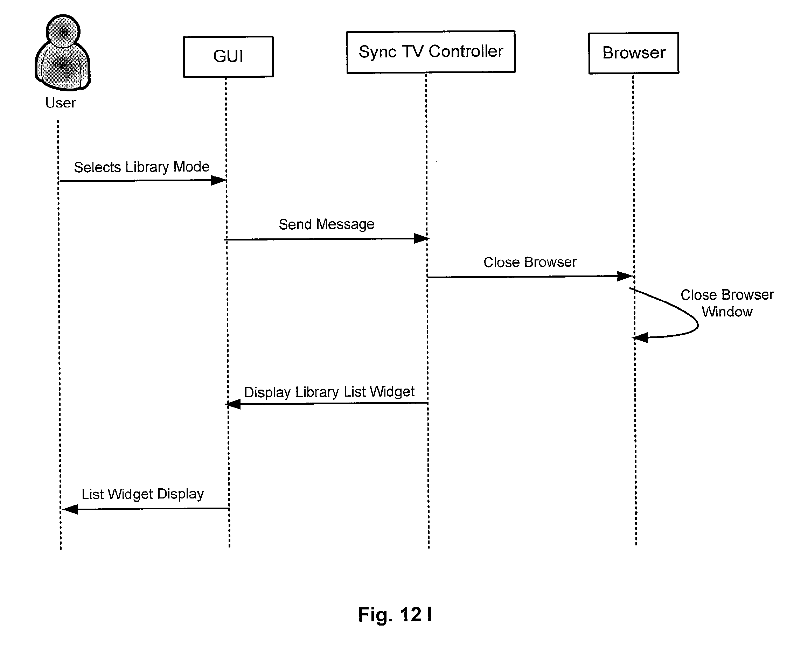

Figure 12I is a block diagram illustrating the sequence of the library mode in which one embodiment of the invention can be practiced. One example of a sequence of library mode is as follows:

### Pre-condition

- Library mode button is available in the GUI.
- User clicks on library mode button.
- GUI sends message to present invention controller.
- Present invention controller sends message to browser to close.
- The browser window disappears.
- Present invention controller sends message to GUI to display the library list widget.

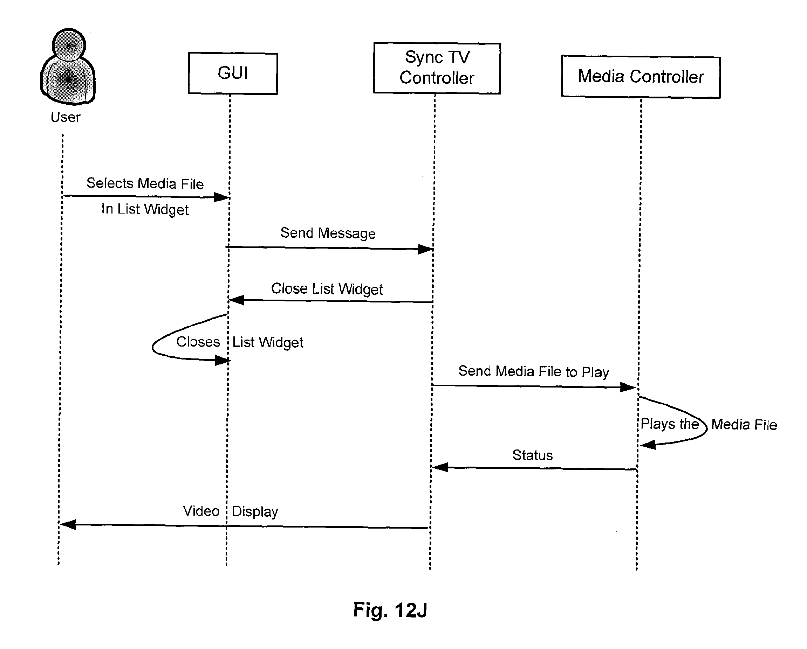

Figure 12J is a block diagram illustrating the media playback in library mode in which one embodiment of the invention can be practiced. One example of the sequence of media playback in library mode is as follows:

### Pre-condition

- The library list widget is displayed in the GUI, showing the different media files stored in the hard disk.
- User selects a media file in the library list widget.
- GUI sends message to present invention controller with the selection.
- Present invention controller sends message to GUI to close library list widget.
- Present invention sends message to media controller to play the media file.

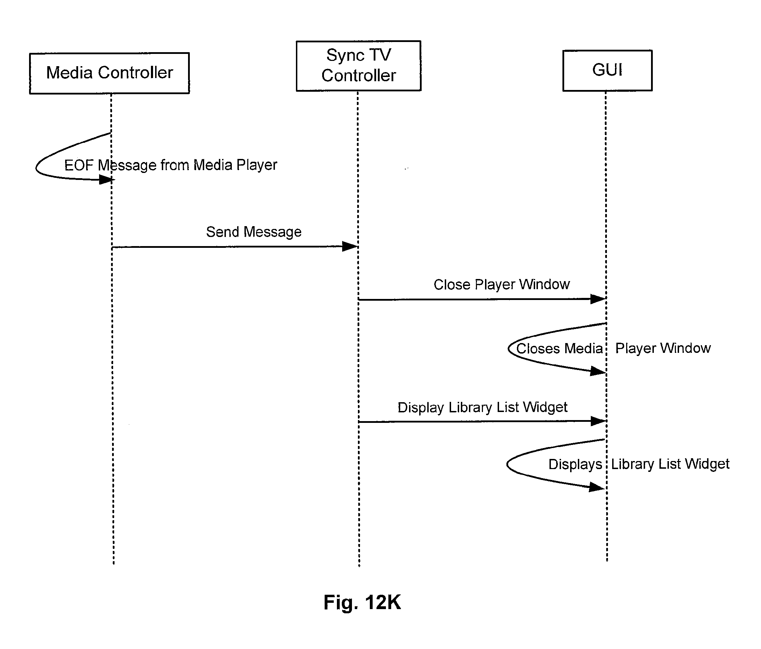

Figure 12K is a block diagram illustrating the sequence of the video completion in library mode in which one embodiment of the invention can be practiced. One example of a sequence of media playback completion in library mode is as follows:

### Pre-condition

- The complete media file has been played in media player window.
- Media player sends message to media controller.
- Media controller sends message to present invention controller.
- Present invention controller sends message to GUI to close the media window.
- Present invention controller sends message to GUI to display library list widget window.

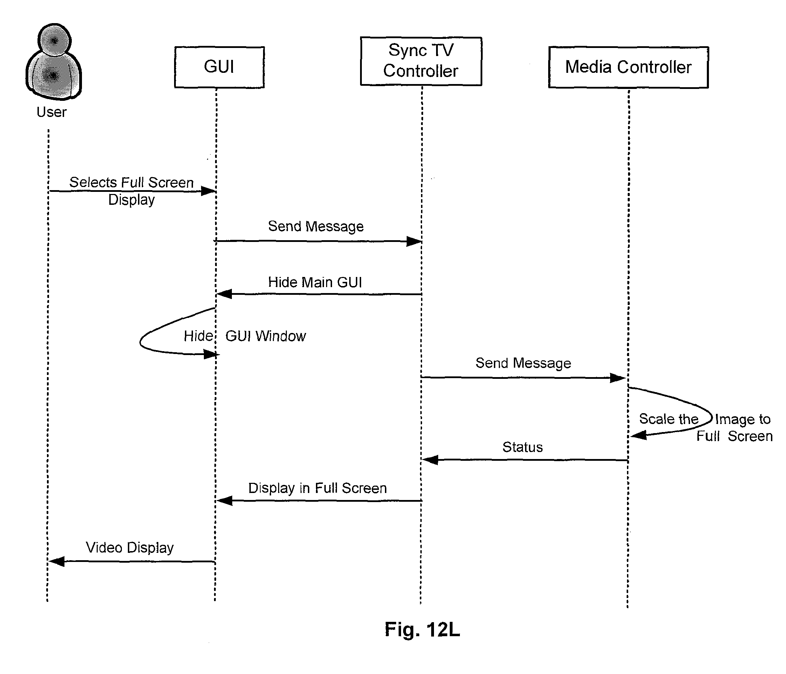

Figure 12L is a block diagram illustrating a sequence of full screen video display in which one embodiment of the invention can be practiced. One example of the sequence of full screen video display is as follows:

### Pre-condition

- Video is being played in the normal window of GUI.
- User has selected video display in full screen mode.
- GUI sends message to present invention controller.
- Present invention controller hides the main GUI.
- Present invention then sends message to media controller to display in full screen mode.
- Present invention controller invokes the key capture module in GUI.

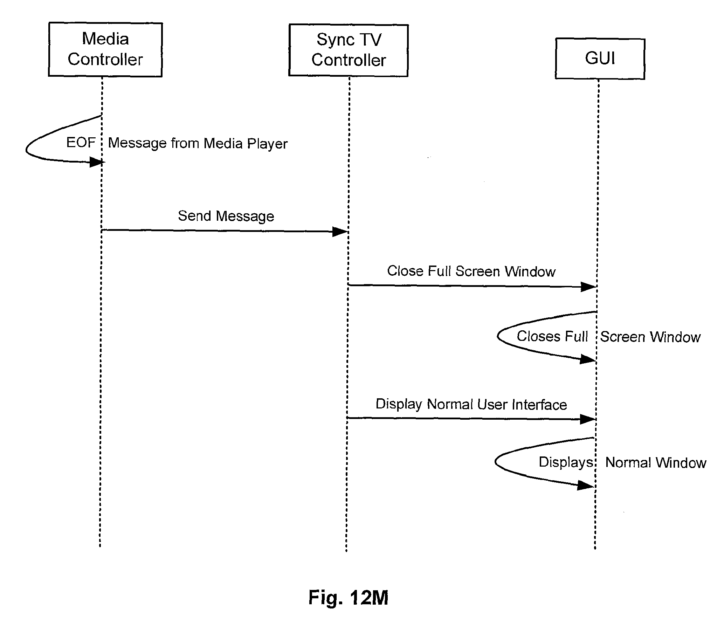

Figure 12M is a block diagram illustrating the sequence of the full screen completion in which one embodiment of the invention can be practiced. One example of sequence of a full screen video completion is as follows:

### Pre-condition

- Video display in full screen mode is complete.
- Media player sends message to Present invention controller.
- Present invention controller sends message to GUI to close full screen window.
- Present invention controller sends message to GUI to display the normal user interface.

The following sections capture the interfaces exposed by the individual modules, which can be accessed by the Present invention controller.

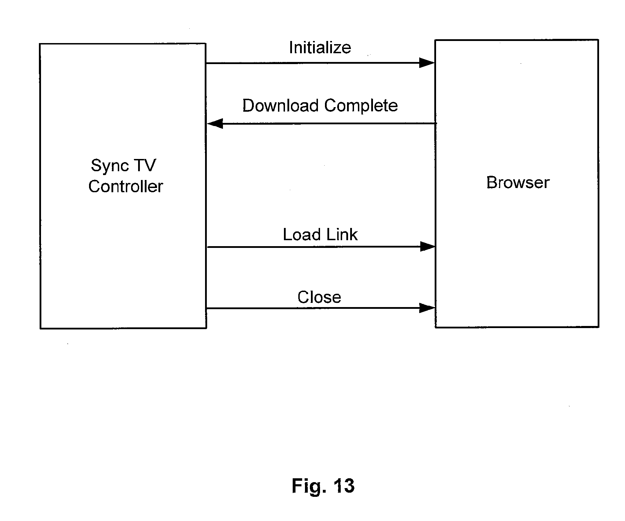

Figure 13 is a block diagram illustrating a browser interface in which one embodiment of the present invention can be practiced. This section addresses the browser module and its interface with the present invention media controller. The browser module provides all the functionalities for browsing HTTP content and the like. It also has the capabilities to download files.
- Interface API's (Application Programming lnterface's) for the present invention controller and browser:
- Browser_lntialize: This API is called by the present invention controller to initialize the browser in the present invention GUI window.
- Browser_load_link: This API is called by the present invention controller to load a link in the browser. The link could be a HTTP link or a video file download link.
- Browser_Close: This API is called the present invention controller to close the browser.

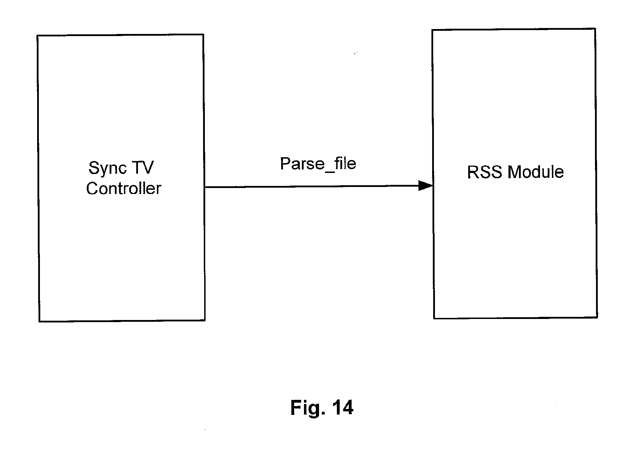

Figure 14 is a block diagram illustrating a RSS module interface in which one embodiment of the present invention can be practiced. This section addresses the RSS module and its interface with the present invention media controller. The RSS module is capable of parsing an RSS file and creating a data structure with the parsed data.

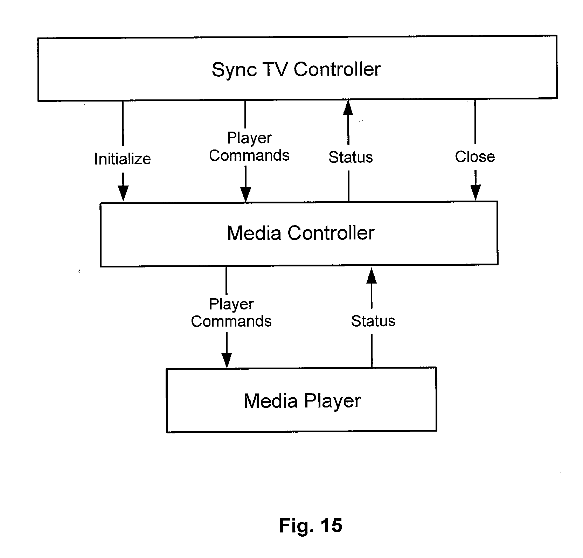

Figure 15 is a block diagram illustrating media controller interfaces in which one embodiment of the present invention can be practiced. This section explains the interfaces exposed by the media controller that can be called by the present invention controller. Media controller is a thin adaptation layer that sits on top of the media player and provides all the functionalities of the media player as interfaces. The media controller interacts with present invention controller and the media player. The media player in turn interacts with the file parsers and decoders. The file parser interacts with the other file parsers (e.g. MP4). The media codecs interacts with the video decoder (e.g. H.264 codec) and audio decoder (i.e., audio codecs) interacts with other codec modules (e.g., AAC codec, HE-ACC codec, E-HE-ACC codec, etc.) The media controller also includes APis. The following API's are the interface API's between the media player and present invention controller.
- Mediacon_Init is the API for initializing the media controller. This API in turn initializes the media player.
- Mediacon_Exit - Present invention controller calls mediacon_exit API when the entire present invention application needs to exit. This API exits the media player.
- Mediacon_Play - This API is used to play the desired media file in the media player.
- Mediacon_Pause - This API causes the video and audio in the media player to be paused.
- Mediacon_Resume - This API causes the media player to play the video and audio data from the position where it had been paused.
- Mediacon_Stop - This API stops the media player from playing the audio and video data.
- Mediacon_FWD - This API forwards the media player by the desired speed.
- Mediacon_RWD - This API rewinds the media player by the desired speed.
- Mediacon_Slow_FWD - This API slows forward the media player by some speed (e.g., 0.5X).
- Mediacon_Slow BWD - This API shows backward the media player by some speed (e.g., 5X).
- Mediacon_Frame_Step - This API rewinds the media player by the desired speed.

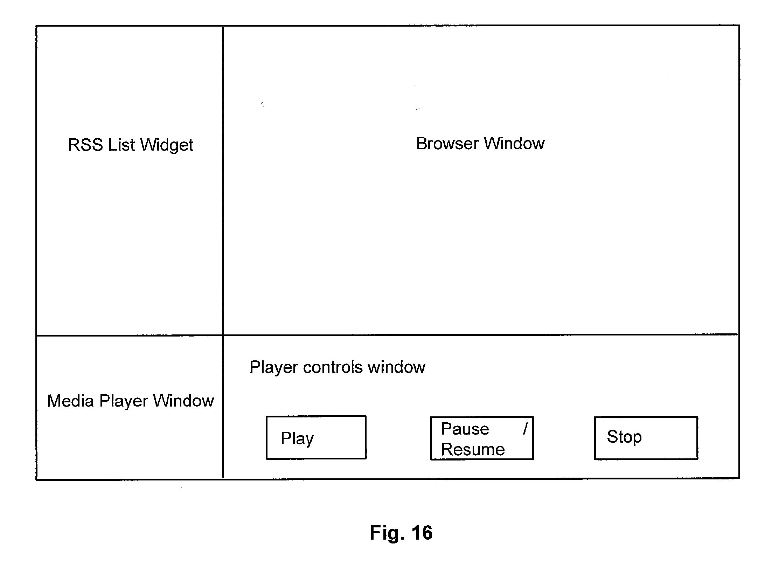

Figure 16 is a block diagram of the GUI interface illustrating the different components of the main GUI window in which one embodiment of the present invention can be practiced. The present invention application GUI is based on the GTK library. GTK+ is a multi platform toolkit for creating graphical user interfaces. The user interaction happens in the main present invention application and is captured as GTK based events. The different components that form the main present invention GUI windows are:
- Browser window - The browser (e.g. Mozilla) gets embedded into the main GUI window as a browser widget or the root window of the browser is the child window of the present invention GUI.
- RSS List widget - This is a GTK list widget which is displayed in the RSS file data.
- Media Player window - The display window of the media player gets embedded into the main GUI in the window.
- Player controls window - This window consists of different video player buttons like play, pause, resume, and stop.
- The main framework is created, with different widgets for RSS list view, browser, media player & media player control buttons.

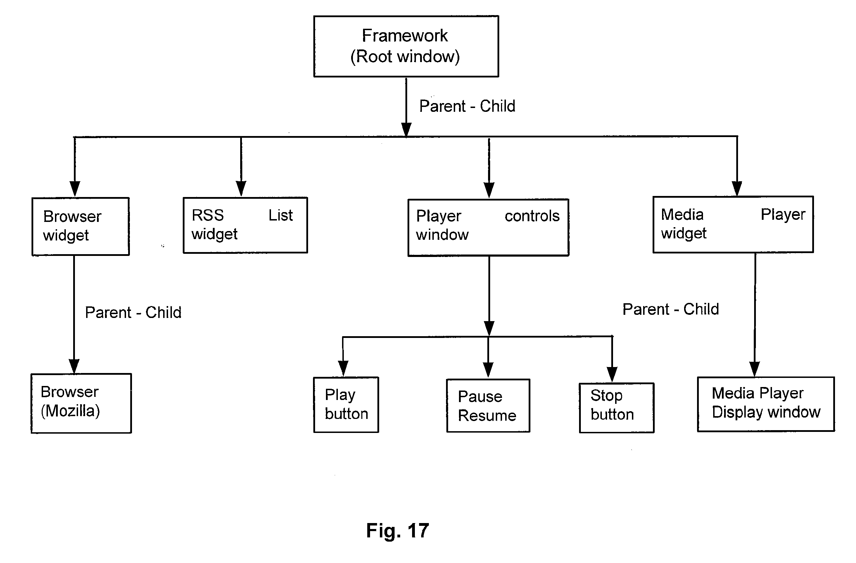

Figure 17 is a block diagram illustrating a framework window in which one embodiment of the invention can be practiced. The framework window is the root window. All the other windows are child windows of this window. The parent child relationship between the different windows is as shown.

Create-GUI - This API is called by the present invention controller to create the main present invention GUI window and display the window. This function creates all the main windows using the different widget pointers sent as parameters. Examples of parameters and their functions are shown below:
- Browser-widget: This is a pointer to the browser widget.
- RSS_Data_widget: This is a pointer to the widget that displays the RSS data.
- Media_player_widget: This is a pointer to the widget inside which the video data has to be played.
- Player_control_widget: This is a pointer to the window which has all the player controls embedded.
- Present invention_ERROR: Returns the Error Conditions or success of building the GUI. One possible error is that the GUI creation may fail if GTK is not installed.
- Destroy_GUI - The present invention controller calls this API to destroy the main GUI window all its child windows. Examples of the parameters and their functions are shown below:
- Browser_widget: This is a pointer to the browser widget.
- RSS_Data_widget: This is a pointer to the widget that displays the RSS data.
- Media_player_widget: This is a pointer to the widget inside which the video data has to be played.
- Player_control _widget: This is a pointer to the window which has all the player controls embedded.
- Present invention_ERROR: Returns the Error Condition or success, of destroying the GUI.
- GUI_ON_Button_Press - This is a call back function to present invention controller and is called whenever a button is pressed in the controls window. Example of the parameter and its function is shown below:
- Player_button: This is pointer to the button that has been clicked on in the player window.
- GUI_display_RSS_data - This API is called by the present invention controller, pointing to the list widget with the RSS data that needs to be displayed. Examples of the parameters and their functions are shown below:
- RSS_Data_widget: Pointer to the RSS list view widget.
- RSS_information_list: This parameter holds the RSS data.
- Present invention_ERROR: Returns the Error Condition or success, of displaying data in the list widget.
- GUI_On_list_selection - This API is called when the user selects one of the items in the list widget. Examples of the parameters and their functions are shown below:
- RSS_Data_widget: Pointer to the RSS list view widget.
- File_link: This parameter holds the link to the video file.
- Present invention controller APIs - This section describes the API's exposed by the present invention controller module, which is called by the individual modules.
- Present invention_Dwnld_Complete - The browser calls this function in the present invention controller once the download is complete with the file name data and complete file path. Examples of the parameters and their functions are shown below:
- File_name: This string contains the file name with path of the downloaded file.
- ERROR_Code: This parameter contains the type of error that has occurred.

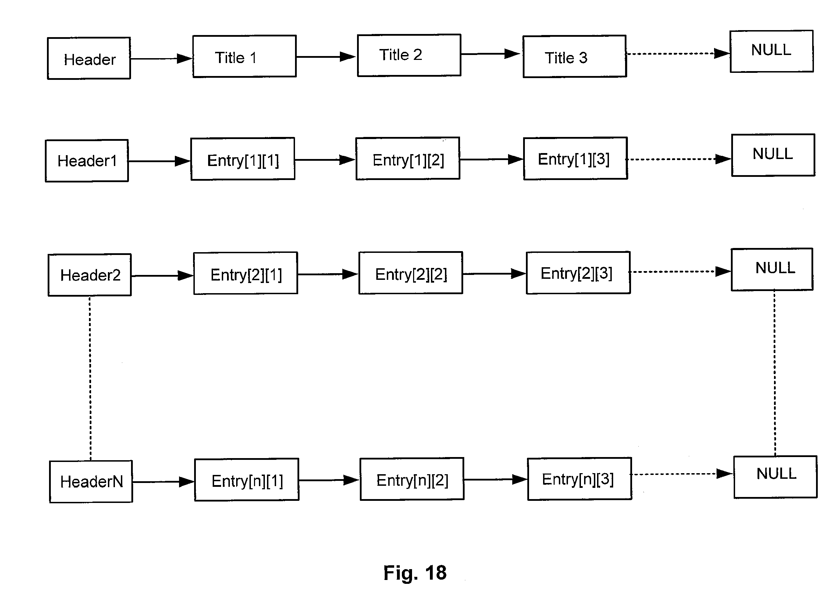

Figure 18 is a block diagram illustrating data structure that is used to store the RSS file parsed data in which one embodiment of the present invention can be practiced. The figure shows one linked list holds the title details of the RSS data. Another array of linked lists holds the entries of the RSS data.

### PRESENT INVENTION SPECIFICATION

### Video File Format

### 1. Structure

- MPEG (e.g., MPEG-4 "QuickTime" file structure (*.M4V))

### 2. Video

- Compression (e.g., H.264)
- Resolutions (e.g., 320x240 "Low", 640x480 "Standard", 1280x720 "HD", 1920x1080 "Full HD", etc."
- Variable bit rate

### 3. Audio

- Compression (e.g., AAC)
- Channel surround
- Low complexity, variable bit rate

Embedded Meta Data: the meta data are embedded in both the content files and ads files. The meta data defines the relationship between the content files and ads files (i.e., new meta data defines which ads to be changed, replaced, etc.)

### 4. Restriction Data

- Content key
- Rights definitions
- Envelop/Signature Formats
- CRLs

### 5. Advertising Data

- Ad insertion points
- Ad tags

### 6. Description Data

- ID/Name, descriptions, audio language, audio/video formats, copyright, parental advisories

### • Subtitles

- Support for multiple language and 2-byte characters Restriction Data

### • Content Key

- Encrypted using a session and/or account key

### • Right Definitions

- Blackout time, expiration time, TTL, renewability, allowed regions

### • Envelop/Signature Formats

- Configuration information for decryption and authentication of content, metadata, and keys

### • CRLs

- To propagate a focused set of revocations

### Advertising Data - There are two cases: Content and Ad

### • Content case:

- Ad insertion: list of time-stamped insertion points, etc.
- Ad tags: target gender, target age group, mandatory ads, etc.

### • Ad case:

- Ad tags: activation, expiration, day part, target gender, target age group, target networks, target shows, etc.

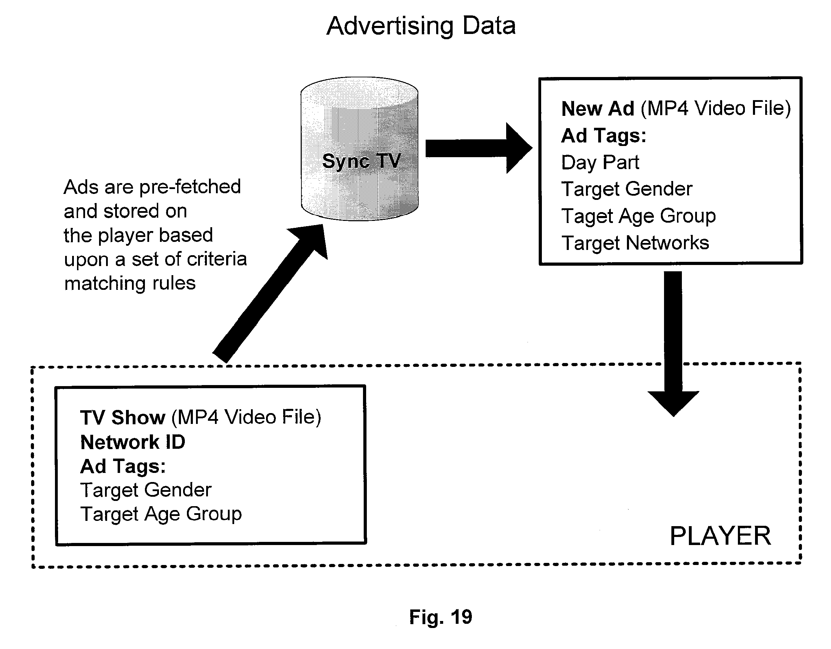

Figure 19 shows a block diagram illustrating advertising data in which one embodiment in which one embodiment of the present invention can be practiced. The ads are pre-fetched and stored on a player based on a set of criteria matching rules. The new ads may be video files (e.g., MP4 video files). As mentioned above, ad tags may be time-stamped (e.g., day part), target gender, target age group, target network, etc. The TV shows may be a video file (e.g., MP4 video file). The TV show may have network ID and ad tags (e.g., target gender, target age group, etc.)

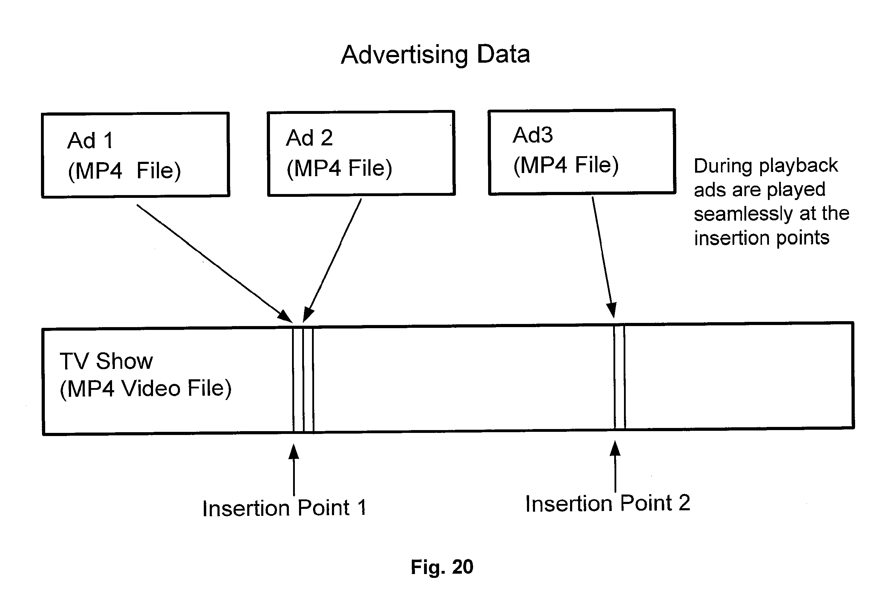

Figure 20 shows a block diagram illustrating ads insertion in which one embodiment of the present invention can be practiced. Ads are inserted in the TV show (i.e., MP4 video file) at various insertion points (e.g., insertion point 1). During playback ads are played seamlessly at the insertion points.

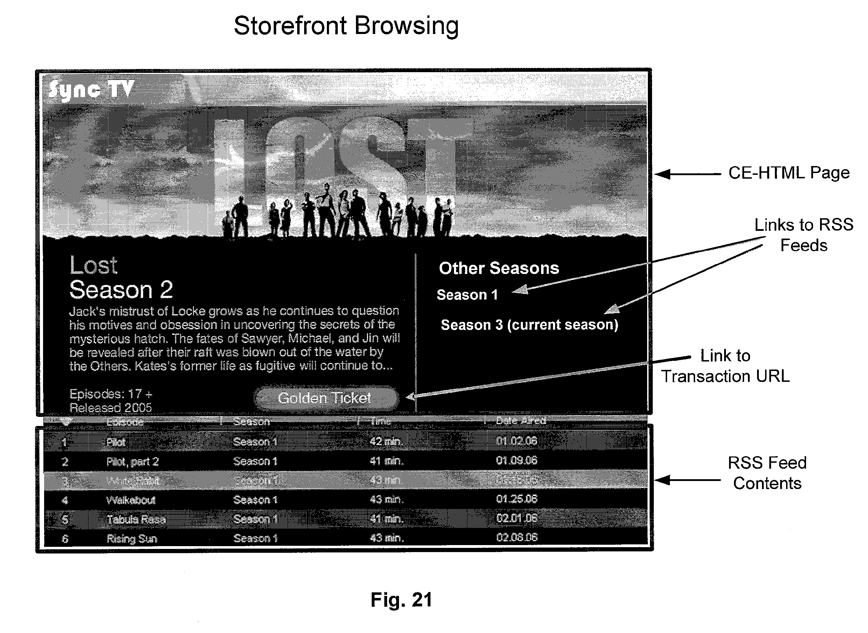

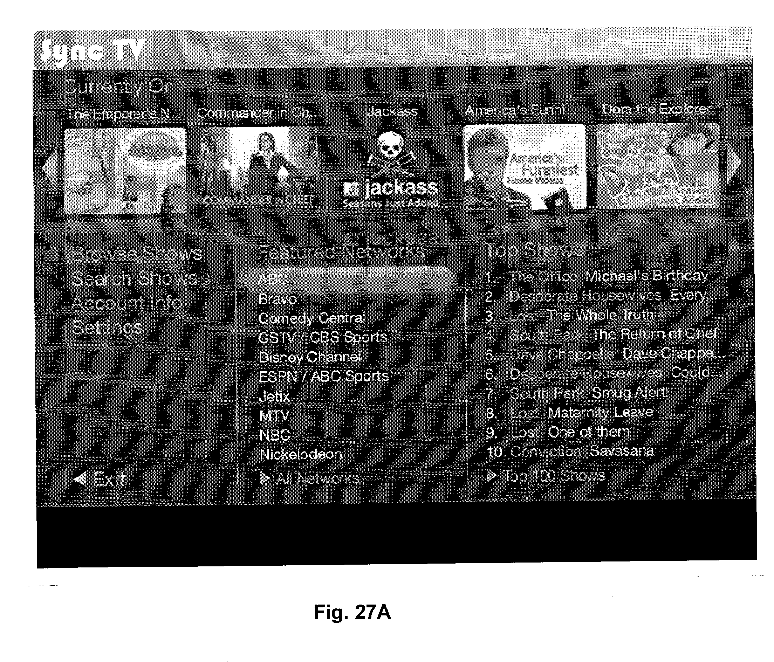

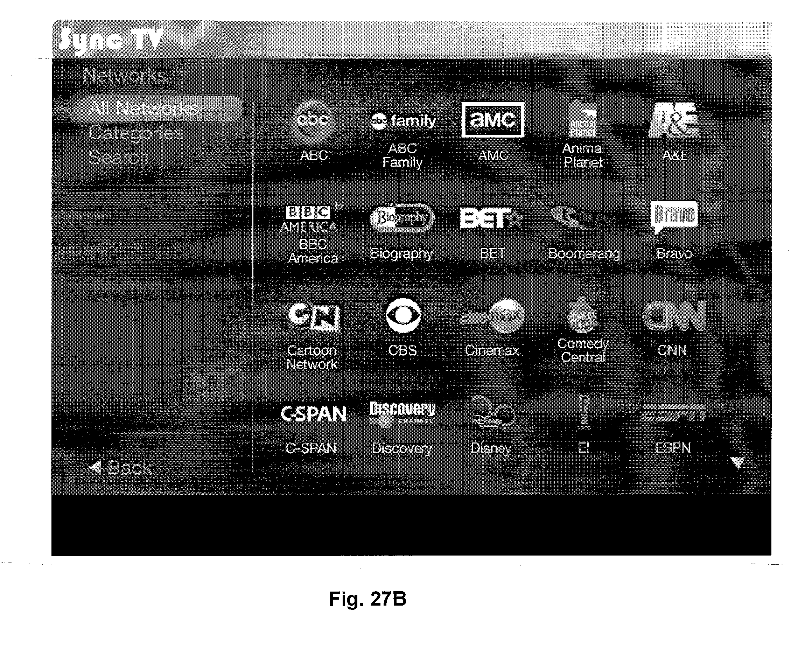

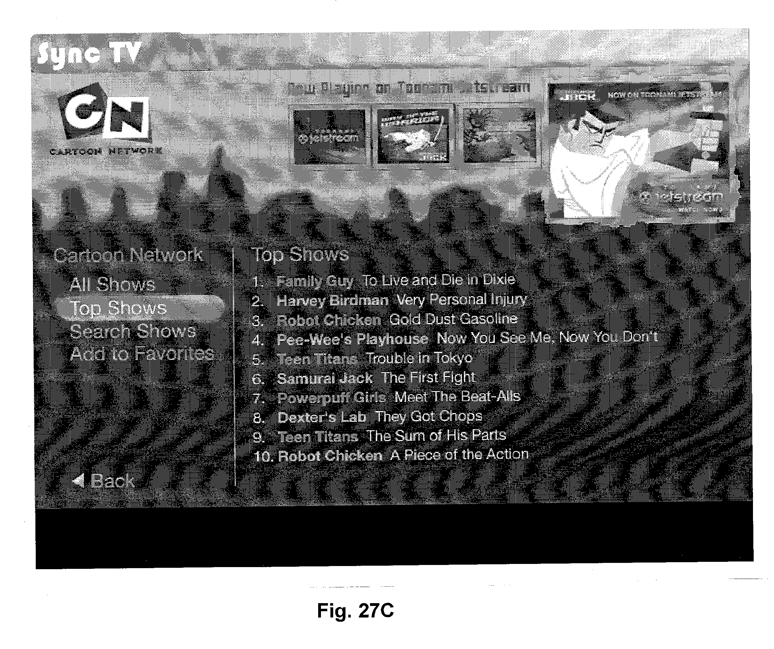

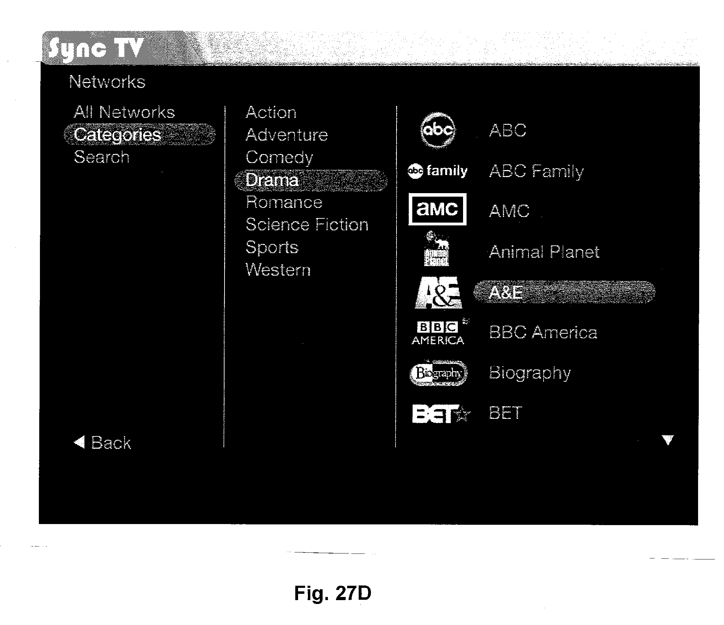

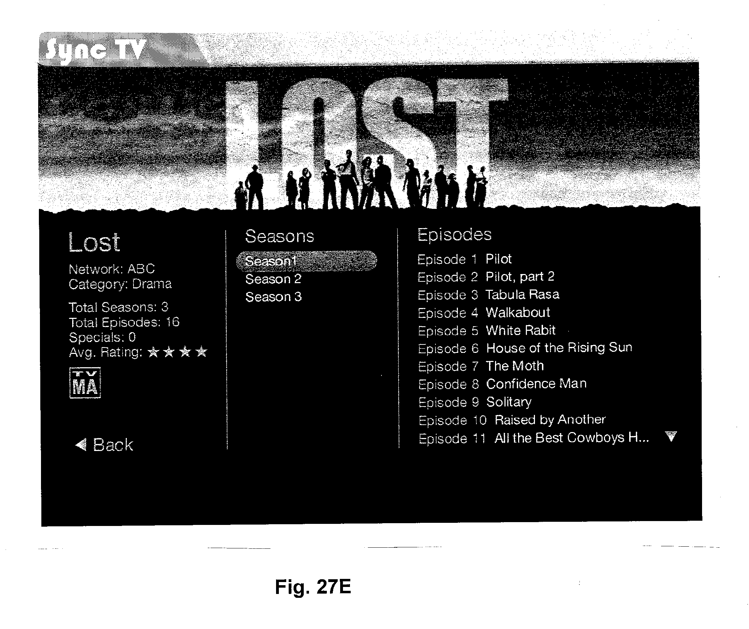

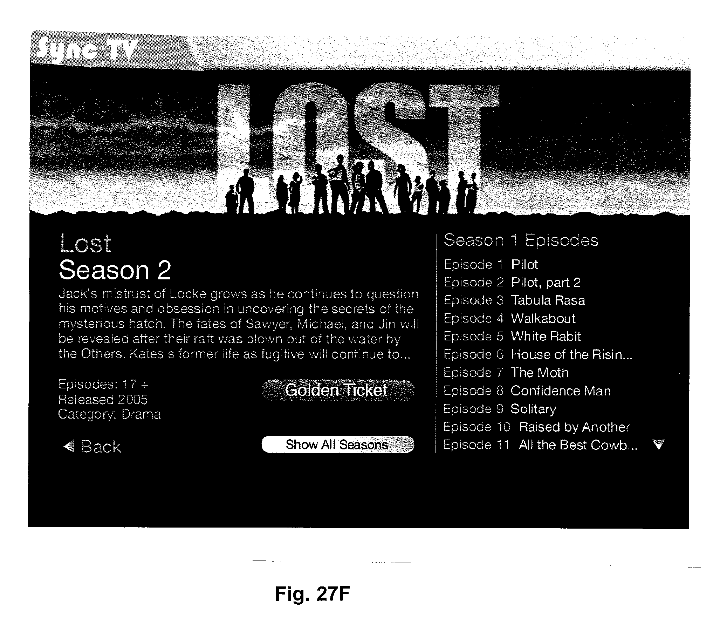

Figure 21 shows a sample screen illustrating storefront browsing in which one embodiment of the present invention can be practiced. The storefront access interface includes storefront browsing (i.e., CE-HTML as defined in CEA-2014, HTTP GET and POST methods), episode browsing (e.g., RSS via HTTP GET), and content download (e.g., HTTP GET to retrieve torrent files and BitTorrent protocol to retrieve content). Figures 27A-F show some samples of the storefront screens.

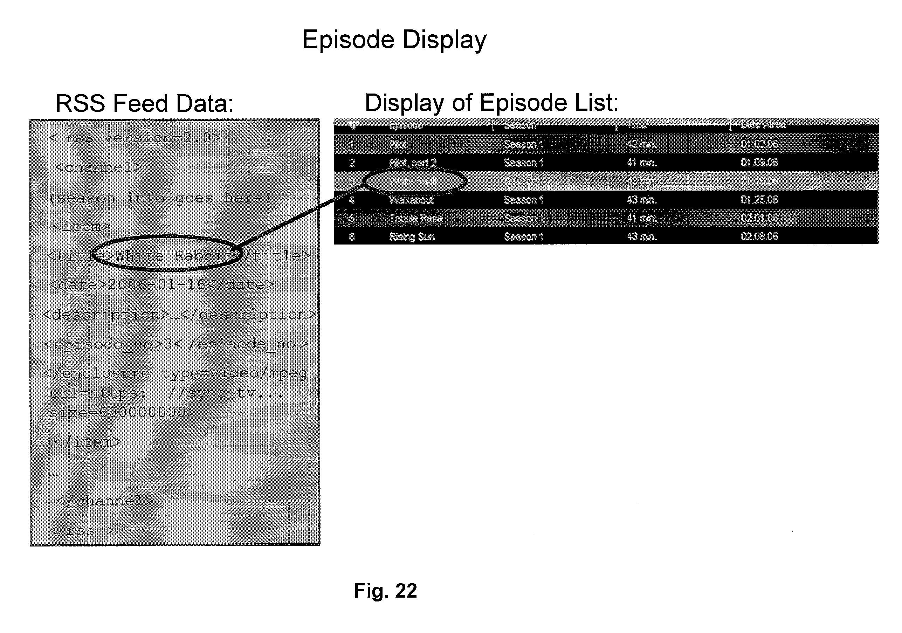

Figure 22 shows a sample screen illustrating episode display in which one embodiment of the present invention can be practiced. As shows in the episode display, each RSS feed represents one season of a show. Each <item> tag in the RSS feed data represents one episode of the season.

The backend service interface provides interface of search TV shows and podcasts, open EPG (electronic program guide) based, and data queries. The search TV shows and podcasts have backend service TLS certificate. The open EPG based is CEA-2033 compliant, has direct access scenario, has GET capabilities and GET data and has extensions for present invention. The data queries may be a template queries, has robust search capabilities by network, show title, description, credits, date, etc., and includes episode data available via RSS. The open EPG extensions includes additional tags in query results such as present invention categories, RSS feed URL, additional image URLs and handling seasons.

The transaction interface includes account setup via SOAP (??) (e.g., soap action "create_account", transactions via HTTP GET (i.e., action URL (including product + transaction type), and has player TLS certification. The transaction types may be a purchase type (e.g., pay for download immediately), subscribe type (e.g., set payment and request for download) and no transaction type (e.g., download only), which requires pre-existing subscription.

The elements used to create an account for an account setup may be one or combination of any of user names, password, account name, first and last names of subscriber, billing address, phone, email address, credit card number including expiration date, name on card, type of card (e.g., Visa, Master Card, American Express, etc.) and the medium to send the statement to (i.e., via fax, email, or land address).

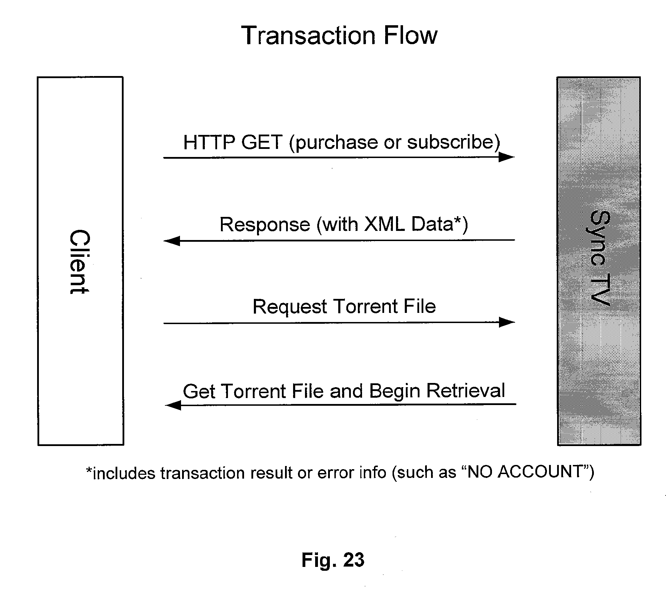

Figure 23 shows a block diagram illustrating a transaction flow in which one embodiment of the present invention can be practiced. The transaction flow is between the client (i.e., subscriber) and the service provider (i.e., Present invention). The service provider side receives an input from the client side a purchase or a subscription (e.g., via HTTP GET). The service provider side then sends a response (may be with XML data) to the client side. The response may include a transaction result or error information (i.e., "no account"). The client sends a request torrent file to the service provider side. The service provider side sends "get torrent" files and begins retrieval to the client side.

### RSS Interface

- Feeds are available for seasons of TV shows and podcasts
- There are also additional tags in RSS feeds
- lDs (network, show, season, episode, etc.)
- Additional image, preview video URLs
- Present invention categories
- Purchases and subscription info/URLs.

In one embodiment, the present invention uses Bit Torrent Protocol in which present invention manages the trackers. The downloading of content includes downloading video files and ads video files. It also includes secure data support such as meta information file extension (e.g., DRM-protected content key and rights, secure peer ID, etc.). Peers are authenticated with each other and file is reassembled with DRM data.

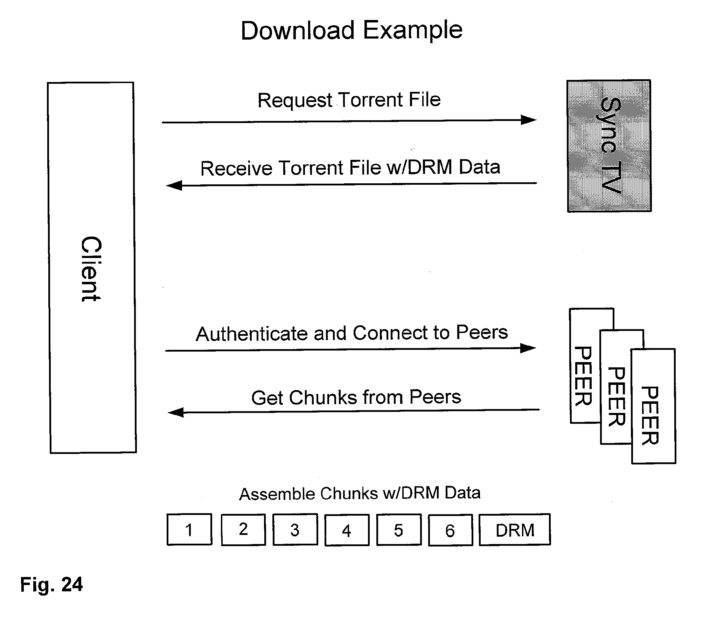

Figure 24 is a block diagram illustrating a download example in which one embodiment of the present invention can be practiced. There shows the client (e.g., subscriber) and provider (e.g., present invention) sides. The provider side includes plurality of peers. The communication between the two sides shows on figure also shows assemble chunks w/DRM data.

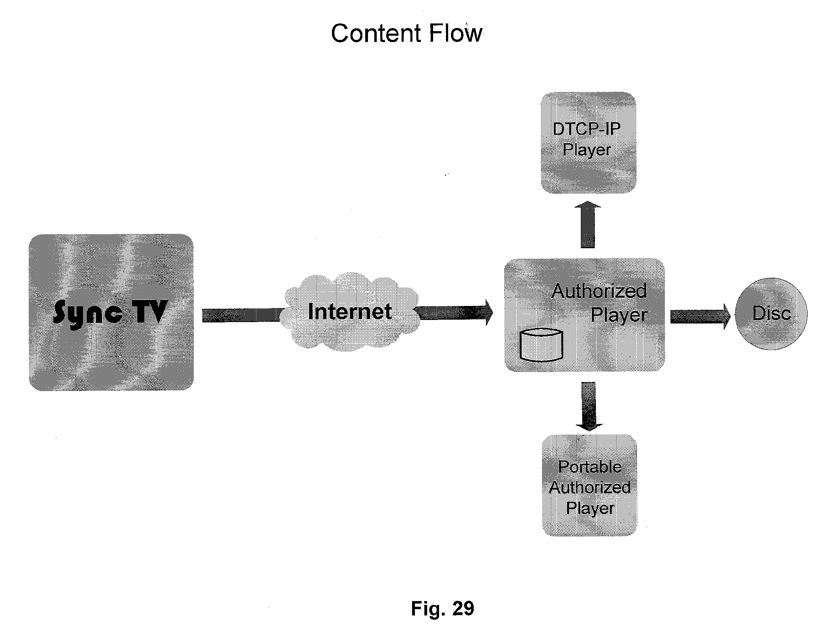

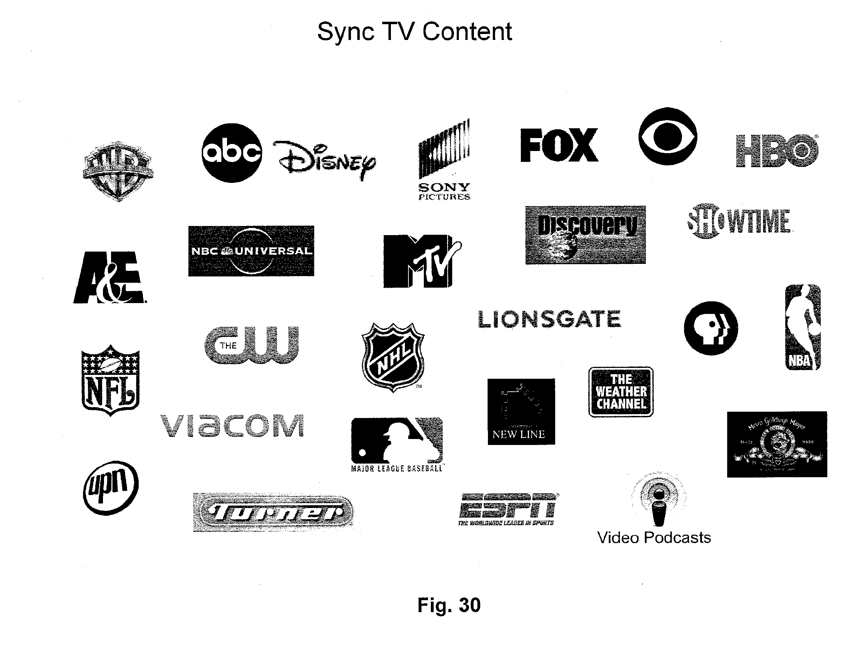

Figure 29 shows a block diagram illustrating the content flow in which one embodiment of the invention can be practiced. The video file(s) (episodes and/or advertisements) are downloaded from present invention to a storage of an authorized player via a medium (e.g., internet). The downloaded video files on the authorized player may be shared among other devices (e.g., DTCP-IP player, disc., portable player, etc. Figure 30 shows a list of sample of the present invention contents.

The present invention includes open standards:
- Base protocol
   - secure HTTP for all storefront communication
   - BitTorrent protocol for media file download
- Content Browsing
   - CE-HTML for storefront user interface
   - XML for back-end service interface
   - RSS for episode tracking
   - DLNA friendly in-home sharing
- Content Protection
   - Coral compliant DRM
   - Outputs: DTCP, HDCP, CGMS-A, Macrovision
   - CSS-on-R for video burn to DVD
- Content Format
   - H.264 for video
   - Multi-channel ACC for audio

Present invention may impose some TV content restrictions such as the number of home players (e.g., PCs, TVs, Blu-ray players, etc) can be used per account. The device may get authorization via Present invention. There may be a restriction via playback, not copy, etc., The present invention may filter all transactions and authorizations. Other restrictions may be applied to the burn content to disc. (e.g., one "copy never" DVD burn per item) and subscriber may have to convert subscription to purchase. The number of portable and/or car devices for playback and/or download of content from an authorized player may be restricted also. The portable devices may not browse storefront, but only when they are in sync with home players.

The output restrictions may include:
- Composite video (i.e., CGMS - A "copy never" w/Macrovision)
- S-video (i.e., CGMS - A "copy never" w/Macrovision)
- Component video (i.e., CGMS - A "copy never" w/Macrovision)
- HDMI (i.e., HDCP "copy never")
- 1394 (i.e., DTCP "copy never")
- Ethernet (i.e., DTCP-IP "copy never")
- Wi-Fi (i.e., DTCP-IP "copy never")

A client may buy subscription per channel, per program series or any combination thereof. The subscriber may then download and view any episode of any season including commercials/ads. The downloaded files or subscribed content may be downloaded or used during subscription. The content is disabled when subscription is cancelled or expired. The present invention pay subscriber fee (e.g., fixed monthly) to content owner. The advertisement spots are dynamically inserted by the player and can occupied up to a certain (e.g., 20%) of the playback time. The ad inventory is downloaded and cached on player with matching content meta data. Expired ads may be replaced with new ads. A sell-through may include a purchase of individual TV episodes or season bundles with or without commercials. The subscription content may be up-sold to full purchase. Some purchased content may allow one-time DVD burn.

While the invention has been described in terms of several embodiments, those of ordinary skill in the art will recognize that the invention is not limited to the embodiments described, but can be practiced with modification and alteration within the spirit and scope of the claimed invention. The description is thus to be regarded as illustrative instead of limiting.

## Claims

1. A method performed by a machine comprising:
providing for the viewing and selecting of content, the content including at least one of an episode content and an ads content, wherein the episode content includes metadata of the episode content and the ads content includes metadata of the ads content;
providing a subscription of the content to a user; and
downloading the content to an end-user remote storage device, **characterized in that** the episode content and the ads content are played from the end-user remote storage device, and wherein the content is downloaded to the end-user remote storage device in chunks from a plurality of peer devices, and the chunks of content are assembled with digital rights management data at the end-user remote storage device.

2. The method of claim 1, wherein the ads content includes content that is one of a content-based ads type and an ads-based ads type, the content-based ads type content including content that is one of an ad-insertion type and an ad-tag type, and the ads based ads type content including content that is of an ad-tag type.

3. The method of claim 2,
wherein ads content that is of the ad-insertion type is inserted into the episode content based on time-stamped insertion points associated with the ads content,
wherein ads content that is both of the content-based and ad-tag types is inserted into the episode content based on criteria including target gender, target age group, and whether or not the ads content is designated mandatory, and
wherein ads content that is both of the ads-based and ad-tag types is inserted into the episode content based on an activation date, expiration date, time of day, target gender, target age group, target network, and target show.

4. The method of any of the preceding claims, wherein the machine includes a central controller module, and one or more of a browser module, a parser module, a digital rights management module and a media controller module.

5. The method of claim 4, wherein the central controller module is aware of the state of each of the one or more modules, and determines a next set of actions that need to be performed.

6. The method of any of the preceding claims, wherein the downloaded content is shared with devices associated with the user, the sharing being restricted based on one or more of: a limit on the number of devices that may share the downloaded content, a copying policy, and a playback policy.

7. The method of any of the preceding claims wherein the episode content and the ads content are downloaded separately.

8. The method of any of the preceding claims wherein the content is downloaded automatically or by user choice.

9. The method of any of the preceding claims wherein the ads content is chosen using the metadata of the episode content.

10. The method of any of the preceding claims further comprising providing a download of refresher ads content according to the metadata of the ads content.

11. The method of any of the preceding claims wherein the ads content is downloaded based upon a set of criteria matching rules.

12. The method of any of the preceding claims wherein the metadata of the episode content includes information on the ads content to be inserted.

13. The method of any of the preceding claims comprising the step of inserting ads content in the episode content while the episode content is being played from the end-user remote storage device.

14. A computer program or a computer program product comprising program code which, when executed by a machine, causes the machine to perform a method according to any of claims 1 to 13.

15. A processor system comprising:
means for providing a viewing and selecting of content, the content including at least one of an episode content and an ads content, wherein the episode content includes metadata of the episode content and the ads content includes metadata of the ads content;
means for providing a subscription of the content to a user; and
means for downloading the content to an end-user remote storage device, **characterized in that** the episode content and the ads content are played from the end-user remote storage device, and wherein the content is downloaded to the end-user remote storage device in chunks from a plurality of peer devices, and the chunks of content are assembled with digital rights management data at the end-user remote storage device.

## Patentansprüche

1. Von einer Maschine durchgeführtes Verfahren, das umfasst:
Bereitstellen einer Anzeige und Auswahl von Inhalt, wobei der Inhalt zumindest eines von einem Episodeninhalt und einem Werbungsinhalt beinhaltet, wobei der Episodeninhalt Metadaten des Episodeninhalts beinhaltet und der Werbungsinhalt Metadaten des Werbungsinhalts beinhaltet;
Bereitstellen eines Abonnements des Inhalts an einen Benutzer; und
Herunterladen des Inhalts auf eine entfernte Endbenutzer-Speichereinrichtung, **dadurch gekennzeichnet, dass** der Episodeninhalt und der Werbungsinhalt von der entfernten Endbenutzer-Speichereinrichtung wiedergegeben werden, und wobei der Inhalt in Abschnitten von einer Mehrzahl von Peer-Einrichtungen auf die entfernte Endbenutzer-Speichereinrichtung heruntergeladen wird und die Inhaltsabschnitte an der entfernten Endbenutzer-Speichereinrichtung mit Daten zur digitalen Rechteverwaltung zusammengefügt werden.

2. Verfahren nach Anspruch 1, wobei der Werbungsinhalt Inhalt beinhaltet, der eines von einem inhaltsbasierten Werbungstyp und einem werbungsbasierten Werbungstyp ist, wobei der Inhalt vom inhaltsbasierten Werbungstyp Inhalt beinhaltet, der eines von einem Ad-Insertion-Typ und einem Ad-Tag-Typ ist, und der Inhalt vom werbungsbasierten Werbungstyp Inhalt beinhaltet, der von einem Ad-Tag-Typ ist.

3. Verfahren nach Anspruch 2,
wobei Werbungsinhalt, der vom Ad-Insertion-Typ ist, basierend auf zeitgestempelten Einfügungspunkten, die mit dem Werbungsinhalt assoziiert sind, in den Episodeninhalt eingefügt wird,
wobei Werbungsinhalt, der sowohl vom inhaltsbasierten als auch vom Ad-Tag-Typ ist, basierend auf Kriterien in den Episodeninhalt eingefügt wird, die Zielgeschlecht, Zielaltersgruppe beinhalten und beinhalten, ob der Werbungsinhalt als obligatorisch ausgewiesen ist, und
wobei Werbungsinhalt, der sowohl vom werbungsbasierten als auch vom Ad-Tag-Typ ist, basierend auf einem Aktivierungsdatum, Ablaufdatum, Tageszeit, Zielgeschlecht, Zielaltersgruppe, Zielnetzwerk und Zielshow in den Episodeninhalt eingefügt wird.

4. Verfahren nach einem der vorstehenden Ansprüche, wobei die Maschine ein zentrales Steuerungsmodul und eines oder mehreres von einem Browsermodul, einem Parsermodul, einem Modul zur digitalen Rechteverwaltung und einem Mediensteuerungsmodul beinhaltet.

5. Verfahren nach Anspruch 4, wobei das zentrale Steuerungsmodul den Status von jedem des einen oder der mehreren Module kennt und einen nächsten Satz von Aktionen bestimmt, die durchgeführt werden müssen.

6. Verfahren nach einem der vorstehenden Ansprüche, wobei der heruntergeladene Inhalt für dem Benutzer zugehörige Einrichtungen freigegeben wird, wobei die Freigabe basierend auf einem oder mehreren des Folgenden beschränkt wird: einer Beschränkung der Anzahl von Einrichtungen, die den heruntergeladenen Inhalt unter Freigabe nutzen dürfen, einer Vervielfältigungsrichtlinie und einer Wiedergaberichtlinie.

7. Verfahren nach einem der vorstehenden Ansprüche, wobei der Episodeninhalt und der Werbungsinhalt getrennt heruntergeladen werden.

8. Verfahren nach einem der vorstehenden Ansprüche, wobei der Inhalt automatisch oder durch Benutzerauswahl heruntergeladen wird.

9. Verfahren nach einem der vorstehenden Ansprüche, wobei der Werbungsinhalt unter Verwendung der Metadaten des Episodeninhalts ausgewählt wird.

10. Verfahren nach einem der vorstehenden Ansprüche, das darüber hinaus das Bereitstellen eines Herunterladens von Aktualisierungswerbungsinhalt gemäß den Metadaten des Werbungsinhalts umfasst.

11. Verfahren nach einem der vorstehenden Ansprüche, wobei der Werbungsinhalt basierend auf einem Satz von Kriterienabgleichungsregeln heruntergeladen wird.

12. Verfahren nach einem der vorstehenden Ansprüche, wobei die Metadaten des Episodeninhalts Informationen zum Werbungsinhalt beinhalten, den es einzufügen gilt.

13. Verfahren nach einem der vorstehenden Ansprüche, das den Schritt des Einfügens von Werbungsinhalt in den Episodeninhalt umfasst, während der Episodeninhalt von der entfernten Endbenutzer-Speichereinrichtung wiedergegeben wird.

14. Computerprogramm oder Computerprogrammprodukt, das einen Programmcode umfasst, der bei Ausführung durch eine Maschine die Maschine veranlasst, ein Verfahren nach einem der Ansprüche 1 bis 13 durchzuführen.

15. Prozessorsystem, das umfasst:
ein Mittel zum Bereitstellen einer Anzeige und Auswahl von Inhalt, wobei der Inhalt zumindest eines von einem Episodeninhalt und einem Werbungsinhalt beinhaltet, wobei der Episodeninhalt Metadaten des Episodeninhalts beinhaltet und der Werbungsinhalt Metadaten des Werbungsinhalts beinhaltet;
ein Mittel zum Bereitstellen eines Abonnements des Inhalts an einen Benutzer; und
ein Mittel zum Herunterladen des Inhalts auf eine entfernte Endbenutzer-Speichereinrichtung, **dadurch gekennzeichnet, dass** der Episodeninhalt und der Werbungsinhalt von der entfernten Endbenutzer-Speichereinrichtung wiedergegeben werden, und wobei der Inhalt in Abschnitten von einer Mehrzahl von Peer-Einrichtungen auf die entfernte Endbenutzer-Speichereinheit heruntergeladen wird und die Inhaltsabschnitte an der entfernten Endbenutzer-Speichereinrichtung mit Daten zur digitalen Rechteverwaltung zusammengefügt werden.

## Revendications

1. Procédé mis en oeuvre par une machine comprenant :
permettre la visualisation et la sélection d'un contenu, le contenu comprenant au moins l'un d'un contenu d'épisode et d'un contenu de publicité, le contenu d'épisode comprenant des métadonnées du contenu d'épisode et le contenu de publicité comprenant des métadonnées du contenu de publicité ;
fournir un abonnement au contenu à un utilisateur ; et
télécharger le contenu sur un dispositif de stockage à distance d'utilisateur final, **caractérisé par le fait que** le contenu d'épisode et le contenu de publicité sont lus à partir du dispositif de stockage à distance d'utilisateur final, et le contenu étant téléchargé sur le dispositif de stockage à distance d'utilisateur final sous forme de segments provenant d'une pluralité de dispositifs homologues, et les segments de contenu sont assemblés avec des données de gestion de droits numériques dans le dispositif de stockage à distance d'utilisateur final.

2. Procédé selon la revendication 1, dans lequel le contenu de publicité comprend un contenu qui est l'un d'un type publicité basée sur contenu et d'un type publicité basée sur publicité, le contenu de type publicité basée sur contenu comprenant un contenu qui est l'un d'un type insertion publicitaire et d'un type balise publicitaire, et le contenu de type publicité basée sur publicité comprenant un contenu qui est d'un type balise publicitaire.

3. Procédé selon la revendication 2,
dans lequel un contenu de publicité qui est du type insertion publicitaire est inséré dans le contenu d'épisode sur la base de points d'insertion horodatés associés au contenu de publicité,
dans lequel un contenu de publicité qui est à la fois du type basé sur contenu et du type balise publicitaire est inséré dans le contenu d'épisode sur la base de critères comprenant un genre cible, un groupe d'âges cible et selon si le contenu de publicité est désigné comme obligatoire, et
dans lequel un contenu de publicité qui est à la fois du type basé sur publicité et du type balise publicitaire est inséré dans le contenu d'épisode sur la base d'une date d'activation, d'une date d'expiration, d'un moment de la journée, d'un genre cible, d'un groupe d'âges cible, d'un réseau cible et d'une émission cible.

4. Procédé selon l'une quelconque des revendications précédentes, dans lequel la machine comprend un module contrôleur central, et un ou plusieurs d'un module navigateur, d'un module analyseur, d'un module de gestion de droits numériques et d'un module contrôleur média.

5. Procédé selon la revendication 4, dans lequel le module contrôleur central connaît l'état du ou de chacun des modules et détermine un prochain ensemble d'actions qui doivent être exécutées.

6. Procédé selon l'une quelconque des revendications précédentes, dans lequel le contenu téléchargé est partagé avec des dispositifs associés à l'utilisateur, le partage étant limité sur la base d'une ou plusieurs parmi : une limite quant au nombre de dispositifs qui peuvent partager le contenu téléchargé, une politique de copie et une politique de lecture.

7. Procédé selon l'une quelconque des revendications précédentes, dans lequel le contenu d'épisode et le contenu de publicité sont téléchargés séparément.

8. Procédé selon l'une quelconque des revendications précédentes, dans lequel le contenu est téléchargé automatiquement ou par choix de l'utilisateur.

9. Procédé selon l'une quelconque des revendications précédentes, dans lequel le contenu de publicité est choisi à l'aide des métadonnées du contenu d'épisode.

10. Procédé selon l'une quelconque des revendications précédentes, comprenant en outre fournir un téléchargement de contenu de publicité de rafraîchissement selon les métadonnées du contenu de publicité.

11. Procédé selon l'une quelconque des revendications précédentes, dans lequel le contenu de publicité est téléchargé sur la base d'un ensemble de règles correspondant à des critères.

12. Procédé selon l'une quelconque des revendications précédentes, dans lequel les métadonnées du contenu d'épisode comprennent des informations sur le contenu de publicité devant être inséré.

13. Procédé selon l'une quelconque des revendications précédentes, comprenant l'étape d'insertion d'un contenu de publicité dans le contenu d'épisode alors que le contenu d'épisode est en train d'être lu à partir du dispositif de stockage à distance d'utilisateur final.

14. Programme d'ordinateur ou produit programme d'ordinateur comprenant un code de programme qui, lorsqu'il est exécuté par une machine, amène la machine à mettre en oeuvre un procédé selon l'une quelconque des revendications 1 à 13.

15. Système de processeur comprenant :
des moyens pour visualiser et sélectionner un contenu, le contenu comprenant au moins l'un d'un contenu d'épisode et d'un contenu de publicité, le contenu d'épisode comprenant des métadonnées du contenu d'épisode et le contenu de publicité comprenant des métadonnées du contenu de publicité ;
des moyens pour fournir un abonnement au contenu à un utilisateur ; et
des moyens pour télécharger le contenu dans un dispositif de stockage à distance d'utilisateur final, **caractérisé par le fait que** le contenu d'épisode et le contenu de publicité sont lus à partir du dispositif de stockage à distance d'utilisateur final, et le contenu étant téléchargé sur le dispositif de stockage à distance d'utilisateur final sous forme de segments provenant d'une pluralité de dispositifs homologues, et les segments de contenu étant assemblés avec des données de gestion de droits numériques dans le dispositif de stockage à distance d'utilisateur final.
